# EUROPEAN PATENT APPLICATION

(11) **EP 4 835 529 A1**
(43) Date of publication of application: **04.11.2026**
(21) Application number: 25741385.6
(22) Date of filing: 08.01.2025
(51) Int. Cl.: G02B 6/42

(54) **COUPLING PLATFORM, COUPLING METHOD, AND RELATED APPARATUS**

(30) Priority: 19.01.2024 CN 202410083390
(71) Applicant: Yinwang Intelligent Technologies Co., Ltd., Shenzhen, Guangdong 518110 (CN)
(72) Inventor: LIU, Jun, Shenzhen, Guangdong 518129 (CN); XU, Yifan, Shenzhen, Guangdong 518129 (CN); HUA, Kangjian, Shenzhen, Guangdong 518129 (CN)
(74) Representative: Maiwald GmbH
(86) International application number: PCT/CN2025/071239
(87) International publication number: WO 2025/152823

(57) **Abstract**

This application discloses a coupling platform, a coupling method, and a related apparatus, and relates to the field of optoelectronics. The coupling platform is configured to couple a first optoelectronic chip to a first optical element, and the first optoelectronic chip is placed under an illumination condition. The coupling platform includes an imaging unit, a control unit, and an adjustment unit. The first optical element is disposed between the first optoelectronic chip and the imaging unit. The foregoing coupling platform simply requires the control unit to control the adjustment unit based on a first image and then the adjustment unit to execute a corresponding control instruction to adjust a relative pose between the first optoelectronic chip and the first optical element, achieving coupling between the first optoelectronic chip and the first optical element. This eliminates the need for complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

## Description

This application claims priority to Chinese Patent Application No. 202410083390.7, filed with the China National Intellectual Property Administration on January 19, 2024 and entitled "COUPLING PLATFORM, COUPLING METHOD, AND RELATED APPARATUS", which is incorporated herein by reference in its entirety.

### TECHNICAL FIELD

This application relates to the field of optoelectronics, and in particular, to a coupling platform, a coupling method, and a related apparatus.

### BACKGROUND

In an optical product, a small assembly tolerance (for example, the assembly tolerance is less than 5 micrometers) usually leads to extremely high assembly difficulty, and assembly accuracy cannot be ensured in a passive assembly manner. Therefore, the optical product is usually assembled in an active assembly manner to ensure the assembly accuracy. Active alignment (active alignment, AA) usually used by a lens module is used as an example. An AA process includes procedures such as material loading, powering on (for example, lighting up a TX/RX board), calibration, and material unloading. The power-on process has complex operations, is time-consuming, and is difficult to automate.

### SUMMARY

This application provides a coupling platform, a coupling method, and a related apparatus, and relates to the field of optoelectronics. Utilizing active illumination, the coupling platform implements clear imaging of an optical element onto an imaging unit. The coupling platform provided in this application features simple operation, short processing time, and ease of automating a coupling process.

**According to a first aspect**, this application provides a coupling platform. The coupling platform is configured to couple a first optoelectronic chip to a first optical element, and the first optoelectronic chip is placed under an illumination condition. The coupling platform includes an imaging unit, a control unit, and an adjustment unit. The first optical element is disposed between the first optoelectronic chip and the imaging unit. The imaging unit is configured to receive a light beam that passes through the first optical element and generate a first image, where the first image includes an image of a light spot on the first optoelectronic chip. The control unit is configured to control the adjustment unit based on the first image. The adjustment unit is configured to adjust a relative pose between the first optoelectronic chip and the first optical element.

This application provides the coupling platform, and the coupling platform includes the imaging unit, the control unit, and the adjustment unit. The coupling platform is configured to couple the first optoelectronic chip to the first optical element, and the first optical element is disposed between the first optoelectronic chip and the imaging unit. The first optoelectronic chip (also referred to as a photosensitive chip) is, for example, an optical transmitter or an optical receiver, and a preset pattern is displayed when the first optoelectronic chip is placed under the illumination condition. A quantity of lenses included in an optical element is not limited in this application. For example, the first optical element includes one or more lenses. A type of the optical element is not limited in this application either. For example, the first optical element is an optical transmitter system or an optical receiver system.

The first optical element is disposed between the first optoelectronic chip and the imaging unit. It may be understood that a light beam reflected by the first optoelectronic chip may reach the imaging unit through the first optical element. Therefore, the first image generated by the imaging unit includes the image of the light spot on the first optoelectronic chip.

The control unit controls the adjustment unit based on the first image, so that the adjustment unit adjusts the relative pose between the first optoelectronic chip and the first optical element. The control unit may control the adjustment unit based on definition of the first image. The control unit may obtain a through-focus (through-focus) curve of the first optical element by using the first image, to obtain an optimal focal length of the first optical element, and control the adjustment unit based on the optimal focal length of the first optical element. The adjustment unit adjusts the relative pose between the first optoelectronic chip and the first optical element, so that the first optoelectronic chip is located on a focal plane of the first optical element, thereby achieving coupling between the first optoelectronic chip and the first optical element.

The foregoing coupling platform simply requires the control unit to control the adjustment unit based on the first image and then the adjustment unit to execute a corresponding control instruction to adjust the relative pose between the first optoelectronic chip and the first optical element, achieving coupling between the first optoelectronic chip and the first optical element. This eliminates the need for complex power-on and power-off processes, streamlining operations and taking short time, while allowing for automatic assembly of an optical product. Therefore, it reduces cycle time (cycle time, CT) of an assembly process of the optical product, enhances assembly efficiency, and increases units per hour (units per hour, UPH) of the optical product.

In a possible implementation, the adjustment unit controls the relative pose between the first optoelectronic chip and the first optical element, so that the imaging unit obtains a plurality of first images. The control unit obtains the through-focus curve of the first optical element based on the plurality of first images, and then the control unit controls the adjustment unit based on the through-focus curve, so that the adjustment unit adjusts the relative pose between the first optoelectronic chip and the first optical element.

In the foregoing implementation, the relative pose between the first optoelectronic chip and the first optical element is adjusted based on the through-focus curve, so that the first optoelectronic chip is coupled to the first optical element. There are advantages such as simple control logic and high accuracy.

In a possible implementation, the coupling platform further includes an illumination unit, and the illumination unit is configured to provide an illumination light beam for the first optoelectronic chip.

In the foregoing implementation, the coupling platform further includes the illumination unit, configured to provide the illumination light beam for the first optoelectronic chip, so that the imaging unit can clearly acquire an illuminated pattern on the first optoelectronic chip. This facilitates accurate control of the control unit, and helps shorten time consumed for coupling the first optoelectronic chip to the first optical element.

In a possible implementation, the light beam provided by the illumination unit may be shone onto the first optoelectronic chip through the first optical element, then the light beam reflected by the first optoelectronic chip is received by the imaging unit through the first optical element, and imaging is performed by the imaging unit.

In the foregoing implementation, the light beam provided by the illumination unit may be shone onto the first optoelectronic chip through the first optical element, so that a design of the illumination unit is simple and easy to implement, and has low costs. For example, the illumination unit is a combination of a flood light source, an optical fiber, and frosted glass.

In another possible implementation, the light beam provided by the illumination unit may be directly shone onto the first optoelectronic chip (or the light beam provided by the illumination unit may be directly shone onto the first optoelectronic chip without passing through the first optical element), a light beam reflected by the first optoelectronic chip is received by the imaging unit through the first optical element, and imaging is performed by the imaging unit.

In the foregoing implementation, the light beam provided by the illumination unit is directly shone onto the first optoelectronic chip without passing through the first optical element. In this way, the light beam provided by the illumination unit is not subject to interference of the first optical element, and a uniform light beam with appropriate brightness can be provided for the first optoelectronic chip, so that the imaging unit clearly acquires an illuminated pattern on the first optoelectronic chip. This facilitates accurate control of the control unit, and helps shorten time consumed for coupling the first optoelectronic chip to the first optical element.

In a possible implementation, the adjustment unit is configured to adjust a spatial position of the first optoelectronic chip and/or a spatial position of the first optical element.

In the foregoing implementation, the adjustment unit is configured to adjust the spatial position of the first optoelectronic chip and/or the spatial position of the first optical element. For example, using a three-dimensional coordinate system (x, y, z) as an example, adjusting the spatial position may be adjusting one or more of the following: position along an x-axis, a y-axis, or a z-axis, or a rotation angle on each axis.

In a possible implementation, the coupling platform is configured to couple a second optoelectronic chip to a second optical element, the second optoelectronic chip is placed under an illumination condition, and the second optical element is disposed between the second optoelectronic chip and the imaging unit. The imaging unit is further configured to receive a light beam that passes through the second optical element and generate a second image, and the second image includes an image of a light spot on the second optoelectronic chip. The control unit is further configured to control the adjustment unit based on the first image and the second image. The adjustment unit is further configured to adjust a relative pose between the second optoelectronic chip and the second optical element.

In the foregoing implementation, the coupling platform is further configured to couple the second optoelectronic chip to the second optical element, the second optoelectronic chip is placed under the illumination condition, and the second optical element is disposed between the second optoelectronic chip and the imaging unit. For descriptions of the second optoelectronic chip and the second optical element, refer to the foregoing descriptions of the first optoelectronic chip and the first optical element. Details are not described herein. It should be noted that the first optoelectronic chip is different from the second optoelectronic chip, and the first optical element is different from the second optical element. Alternatively, the first optoelectronic chip and the first optical element belong to a first lens module, the second optoelectronic chip and the second optical element belong to a second lens module, and the first lens module is different from the second lens module. Therefore, the foregoing coupling platform can perform coupling for the two lens modules at the same time, thereby improving assembly efficiency and units per hour of an optical product.

The imaging unit separately generates the first image and the second image by receiving the light beam passing through the first optical element and the light beam passing through the second optical element, the first image includes the image of the light spot on the first optoelectronic chip, and the second image includes the image of the light spot on the second optoelectronic chip. The control unit controls the adjustment unit based on the first image and the second image, so that the adjustment unit adjusts the relative pose between the second optoelectronic chip and the second optical element.

An adjustment process of the adjustment unit may be that the control unit controls the adjustment unit based on definition of the image of the light spot on the second optoelectronic chip. The control unit may obtain a through-focus (through-focus) curve of the second optical element by using the second image, to obtain an optimal focal length of the second optical element, and control the adjustment unit based on the optimal focal length of the second optical element. The adjustment unit adjusts the relative pose between the second optoelectronic chip and the second optical element, so that the second optoelectronic chip is located on a focal plane of the second optical element, thereby achieving coupling between the second optoelectronic chip and the second optical element.

Alternatively, an adjustment process of the adjustment unit may be that the control unit obtains a relative position between the image of the light spot on the first optoelectronic chip and the image of the light spot on the second optoelectronic chip by using the first image and the second image, and controls the adjustment unit based on the relative position. The adjustment unit adjusts the relative pose between the second optoelectronic chip and the second optical element, so that the image of the light spot on the first optoelectronic chip coincides with the image of the light spot on the second optoelectronic chip, thereby achieving coupling between the first lens module and the second lens module.

Optionally, the foregoing process of implementing coupling between the first lens module and the second lens module may be alternatively implemented by the adjustment unit by adjusting the relative pose between the first optoelectronic chip and the first optical element, or may be implemented by the adjustment unit by adjusting both the relative pose between the first optoelectronic chip and the first optical element and the relative pose between the second optoelectronic chip and the second optical element.

On the foregoing coupling platform, it is just required that the control unit control the adjustment unit based on the first image and the second image and then the adjustment unit execute a corresponding control instruction to adjust the relative pose between the second optoelectronic chip and the second optical element, so that coupling between the second optoelectronic chip and the second optical element and coupling between the first lens module (including the first optical element and the first optoelectronic chip) and the second lens module (including the second optical element and the second optoelectronic chip) can be completed. The coupling platform can simultaneously couple the first optoelectronic chip to the first optical element and couple the second optoelectronic chip to the second optical element, so that assembly efficiency and units per hour of an optical product can be improved. In addition, the coupling platform can further implement automatic coupling between the first lens module and the second lens module based on coupling between the optical elements and the optoelectronic chips. This also helps shorten cycle time of an assembly process of the optical product, and improve the assembly efficiency and the units per hour of the optical product.

In a possible implementation, the adjustment unit controls the relative pose between the second optoelectronic chip and the second optical element, so that the imaging unit obtains a plurality of second images. The control unit obtains a through-focus curve of the second optical element based on the plurality of second images, and then the control unit controls the adjustment unit based on the through-focus curve, so that the adjustment unit adjusts the relative pose between the second optoelectronic chip and the second optical element.

In the foregoing implementation, the relative pose between the second optoelectronic chip and the second optical element is adjusted based on the through-focus curve, so that the second optoelectronic chip is coupled to the second optical element. There are advantages such as simple control logic and high accuracy.

In a possible implementation, the coupling platform further includes an illumination unit, and the illumination unit is configured to provide an illumination light beam for the second optical element.

In the foregoing implementation, the illumination unit is further configured to provide the illumination light beam for the second optoelectronic chip, so that the imaging unit can clearly acquire an illuminated pattern on the second optoelectronic chip. This facilitates accurate control of the control unit, and helps shorten time consumed for coupling the second optoelectronic chip to the second optical element.

In a possible implementation, the light beam provided by the illumination unit may be shone onto the second optoelectronic chip through the second optical element, then a light beam reflected by the second optoelectronic chip is received by the imaging unit through the second optical element, and imaging is performed by the imaging unit.

In the foregoing implementation, the light beam provided by the illumination unit may be shone onto the second optoelectronic chip through the second optical element, so that a design of the illumination unit is simple and easy to implement, and has low costs. For example, the illumination unit is a combination of a flood light source, an optical fiber, and frosted glass.

In another possible implementation, the light beam provided by the illumination unit may be directly shone onto the second optoelectronic chip (or the light beam provided by the illumination unit may be directly shone onto the second optoelectronic chip without passing through the second optical element), the light beam reflected by the second optoelectronic chip is received by the imaging unit through the second optical element, and imaging is performed by the imaging unit.

In the foregoing implementation, the light beam provided by the illumination unit is directly shone onto the second optoelectronic chip without passing through the second optical element. In this way, the light beam provided by the illumination unit is not subject to interference of the second optical element, and a uniform light beam with appropriate brightness can be provided for the second optoelectronic chip, so that the imaging unit clearly acquires an illuminated pattern on the second optoelectronic chip. This facilitates accurate control of the control unit, and helps shorten time consumed for coupling the second optoelectronic chip to the second optical element.

In a possible implementation, the adjustment unit is further configured to adjust a spatial position of the second optoelectronic chip and/or a spatial position of the second optical element.

In the foregoing implementation, the adjustment unit is configured to adjust the spatial position of the second optoelectronic chip and/or the spatial position of the second optical element. For example, using a three-dimensional coordinate system (x, y, z) as an example, adjusting the spatial position may be adjusting one or more of the following: position along an x-axis, a y-axis, or a z-axis, or a rotation angle on each axis.

In a possible implementation, the first optoelectronic chip is an optical transmitter chip, and the second optoelectronic chip is an optical receiver chip. Alternatively, the first optoelectronic chip is an optical receiver chip, and the second optoelectronic chip is an optical transmitter chip. Alternatively, both the first optoelectronic chip and the second optoelectronic chip are optical transmitter chips. Alternatively, both the first optoelectronic chip and the second optoelectronic chip are optical receiver chips.

In the foregoing implementation, when the first optoelectronic chip is an optical transmitter chip, and the second optoelectronic chip is an optical receiver chip, the first optical element is an optical transmitter system (optical transmitter lens), and the second optical element is an optical receiver system (optical receiver lens). When the first optoelectronic chip is an optical receiver chip, and the second optoelectronic chip is an optical transmitter chip, the first optical element is an optical receiver system (optical receiver lens), and the second optical element is an optical transmitter system (optical transmitter lens). When both the first optoelectronic chip and the second optoelectronic chip are optical transmitter chips, both the first optical element and the second optical element are optical transmitter systems (optical transmitter lenses). When both the first optoelectronic chip and the second optoelectronic chip are optical receiver chips, both the first optical element and the second optical element are optical receiver systems (optical receiver lenses).

In a possible implementation, the first optoelectronic chip is rigidly connected to the second optoelectronic chip, and/or the first optical element is rigidly connected to the second optical element.

In the foregoing implementation, that the first optoelectronic chip is rigidly connected to the second optoelectronic chip may be understood as that a relative position between the first optoelectronic chip and the second optoelectronic chip is fixed. Similarly, that the first optical element is rigidly connected to the second optical element may be understood as that a relative position between the first optical element and the second optical element is fixed. The first optoelectronic chip is rigidly connected to the second optoelectronic chip, so that the adjustment unit can simultaneously adjust spatial positions of the first optoelectronic chip and the second optoelectronic chip. The first optical element is rigidly connected to the second optical element, so that the adjustment unit can simultaneously adjust spatial positions of the first optical element and the second optical element. This shortens cycle time of an assembly process of an optical product, and improves assembly efficiency and units per hour of the optical product.

In a possible implementation, the adjustment unit includes a six-dimensional adjustment stage or a three-dimensional adjustment stage.

In the foregoing implementation, a quantity of six-dimensional adjustment stages or three-dimensional adjustment stages included in the adjustment unit is not limited. For example, when the adjustment unit is configured to adjust the relative pose between the first optoelectronic chip and the first optical element, relative poses of the first optoelectronic chip and the first optical element may be respectively adjusted by using two three-dimensional adjustment stages, or relative pose of the first optoelectronic chip and the first optical element may be respectively adjusted by using two six-dimensional adjustment stages, or a relative pose of the first optoelectronic chip or the first optical element may be adjusted by using one six-dimensional adjustment stage, or relative pose of the first optoelectronic chip and the first optical element may be respectively adjusted by using one six-dimensional adjustment stage and one three-dimensional adjustment stage. Various positions can be adjusted by using the six-dimensional adjustment stage or the three-dimensional adjustment stage, so that cycle time of an assembly process of an optical product is shortened, and assembly efficiency and units per hour of the optical product are improved.

In a possible implementation, the imaging unit includes an imaging optical element and an image sensor. The imaging optical element includes a long-focus lens or a collimator, and the image sensor is configured to generate an image based on a light beam collected by the imaging optical element.

In the foregoing implementation, the imaging unit includes the imaging optical element and the image sensor. The imaging optical element includes the long-focus lens or the collimator, which both have a high magnification ratio, so that the light beam reflected by the first optoelectronic chip and/or the light beam reflected by the second optoelectronic chip can be obtained, and interference caused by a stray light beam to the light beam reflected by the first optoelectronic chip and/or the light beam reflected by the second optoelectronic chip can be reduced. In this way, the image sensor can clearly image the light spot on the first optoelectronic chip and the light spot on the second optoelectronic chip. This facilitates accurate control of the control unit, and helps shorten time consumed for assembling the first optoelectronic chip and the first optical element.

Optionally, an angular resolution A of the imaging optical element and an angular resolution B of the first optical element satisfy the following relationship: A≥10B. Similarly, the angular resolution A of the imaging optical element and an angular resolution C of the second optical element satisfy the following relationship: A≥10C.

Optionally, the image sensor is a high-resolution and low-illumination detector.

Optionally, an imaging optical element with an appropriate magnification ratio may be selected based on one or more of the following: for example, specifications (for example, angular resolutions) of the first optical element and the second optical element, and pixel sizes of the first optoelectronic chip and the second optoelectronic chip.

In a possible implementation, the illumination unit includes any one or more of the following: an optical fiber, an optical fiber, frosted glass, or a reflector.

In the foregoing implementation, the illumination unit includes any one or more of the following: the optical fiber, the optical fiber, the frosted glass, or the reflector. For example, the optical fiber and the frosted glass can form a flood light source, and then the reflector can reflect a light beam to the first optoelectronic chip and/or the second optoelectronic chip. For another example, the optical fiber can directly provide a light source for the first optoelectronic chip and/or the second optoelectronic chip. The optical fiber, the optical fiber, the frosted glass, or the reflector has low costs and simple operations. This helps reduce costs of the coupling platform.

**According to a second aspect**, this application provides a coupling platform. The coupling platform is configured to couple a first lens module to a second lens module, and a spacing between the first lens module and an imaging unit is equal to a spacing between the second lens module and the imaging unit. The first lens module includes a first optoelectronic chip and a first optical element, the second lens module includes a second optoelectronic chip and a second optical element, and the first optoelectronic chip and the second optoelectronic chip are placed under an illumination condition. The coupling platform includes an imaging unit, a control unit, and an adjustment unit. The imaging unit is configured to receive a light beam that passes through the first optical element and a light beam that passes through the second optical element, and separately generate a first image and a second image. The first image includes an image of a light spot on the first optoelectronic chip, and the second image includes an image of a light spot on the second optoelectronic chip. The control unit is configured to control the adjustment unit based on the first image and the second image. The adjustment unit is configured to adjust a relative pose between the first lens module and the second lens module.

This application provides the coupling platform, and the coupling platform includes the imaging unit, the control unit, and the adjustment unit. The coupling platform is configured to couple the first lens module to the second lens module, the first lens module includes the first optoelectronic chip and the first optical element, and the second lens module includes the second optoelectronic chip and the second optical element. The first optoelectronic chip and the second optoelectronic chip are also referred to as photosensitive chips, for example, optical transmitters or optical detectors, and preset patterns are displayed when the first optoelectronic chip and the second optoelectronic chip are placed under an illumination condition. A quantity of lenses included in an optical element is not limited in this application. For example, the first optical element and the second optical element each include one or more lenses. A type of the optical element is not limited in this application either. For example, the first optical element is an optical transmitter system, and the second optical element is an optical receiver system. For another example, the first optical element is an optical receiver system, and the second optical element is an optical transmitter system. It may be understood that the first lens module or the second lens module is a module in which an optoelectronic chip and an optical element are coupled. For example, the first optoelectronic chip and the first optical element may be coupled to obtain the first lens module according to any one of the implementations of the first aspect and related possible implementations. The second optoelectronic chip and the second optical element may be coupled to obtain the second lens module according to any one of the implementations of the first aspect and related possible implementations.

The spacing between the first lens module and the imaging unit is equal to the spacing between the second lens module and the imaging unit, so that sizes of the images that are of the light spots on the first optoelectronic chip and the second optoelectronic chip and that are obtained by the imaging unit are equal. This facilitates appropriate control of the control unit, so that coupling between the first lens module and the second lens module is quickly completed.

The imaging unit separately generates the first image and the second image by receiving the light beam passing through the first optical element and the light beam passing through the second optical element, the first image includes the image of the light spot on the first optoelectronic chip, and the second image includes the image of the light spot on the second optoelectronic chip. The control unit controls the adjustment unit based on the first image and the second image, so that the adjustment unit adjusts the relative pose between the first lens module and the second lens module. For example, the control unit obtains a relative position between the image of the light spot on the first optoelectronic chip and the image of the light spot on the second optoelectronic chip by using the first image and the second image, and controls the adjustment unit based on the relative position. The adjustment unit adjusts the relative pose between the first lens module and the second lens module, so that the image of the light spot on the first optoelectronic chip coincides with the image of the light spot on the second optoelectronic chip, thereby achieving coupling between the first lens module and the second lens module.

The foregoing coupling platform simply requires the control unit to control the adjustment unit based on the first image and the second image and then the adjustment unit to execute a corresponding control instruction to adjust the relative pose between the first lens module and the second lens module, achieving coupling between the first lens module and the second lens module. This eliminates the need to perform complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

Optionally, when the spacing between the first lens module and the imaging unit is not equal to the spacing between the second lens module and the imaging unit, the adjustment unit may adjust the relative pose between the first lens module and the second lens module, so that the spacing between the first lens module and the imaging unit is equal to the spacing between the second lens module and the imaging unit.

In a possible implementation, the coupling platform further includes an illumination unit, and the illumination unit is configured to provide an illumination light beam for the first optoelectronic chip and/or provide an illumination light beam for the second optoelectronic chip.

In the foregoing implementation, the coupling platform further includes the illumination unit, configured to provide the illumination light beam for the first optoelectronic chip and/or provide the illumination light beam for the second optoelectronic chip, so that the imaging unit can clearly acquire an illuminated pattern on the first optoelectronic chip and/or an illuminated pattern on the second optoelectronic chip. This facilitates accurate control of the control unit, and helps shorten time consumed for coupling the first lens module to the second lens module.

In a possible implementation, the light beam provided by the illumination unit may be shone onto the first optoelectronic chip through the first optical element, then a light beam reflected by the first optoelectronic chip is received by the imaging unit through the first optical element, and imaging is performed by the imaging unit. Similarly, the light beam provided by the illumination unit may be shone onto the second optoelectronic chip through the second optical element, then a light beam reflected by the second optoelectronic chip is received by the imaging unit through the second optical element, and imaging is performed by the imaging unit.

In the foregoing implementation, the light beam provided by the illumination unit may be shone onto the first optoelectronic chip through the first optical element, and may be further shone onto the second optoelectronic chip through the second optical element, so that a design of the illumination unit is simple and easy to implement, and has low costs. For example, the illumination unit is a combination of a flood light source, an optical fiber, and frosted glass.

In another possible implementation, the light beam provided by the illumination unit may be directly shone onto the first optoelectronic chip (or the light beam provided by the illumination unit may be directly shone onto the first optoelectronic chip without passing through the first optical element), a light beam reflected by the first optoelectronic chip is received by the imaging unit through the first optical element, and imaging is performed by the imaging unit. Similarly, the light beam provided by the illumination unit may be directly shone onto the second optoelectronic chip (or the light beam provided by the illumination unit may be directly shone onto the second optoelectronic chip without passing through the second optical element), a light beam reflected by the second optoelectronic chip is received by the imaging unit through the second optical element, and imaging is performed by the imaging unit.

In the foregoing implementation, the light beam provided by the illumination unit is directly shone onto the first optoelectronic chip and the second optoelectronic chip without passing through the first optical element or the second optical element. In this way, the light beam provided by the illumination unit is not subject to interference of the first optical element and the second optical element, and a uniform light beam with appropriate brightness can be provided for the first optoelectronic chip and the second optoelectronic chip, so that the imaging unit clearly acquires an illuminated pattern on the first optoelectronic chip and an illuminated pattern on the second optoelectronic chip. This facilitates accurate control of the control unit, and helps shorten time consumed for coupling the first lens module to the second lens module.

In a possible implementation, the adjustment unit is configured to adjust a spatial position of the first lens module and/or a spatial position of the second lens module.

In the foregoing implementation, the adjustment unit is configured to adjust the spatial position of the first lens module and/or the spatial position of the second lens module. For example, using a three-dimensional coordinate system (x, y, z) as an example, adjusting the spatial position may be adjusting one or more of the following: position along an x-axis, a y-axis, or a z-axis, or a rotation angle on each axis.

In a possible implementation, the first lens module is an optical transmitter module, and the second lens module is an optical receiver module.

In a possible implementation, the adjustment unit includes a six-dimensional adjustment stage or a three-dimensional adjustment stage.

In the foregoing implementation, a quantity of six-dimensional adjustment stages or three-dimensional adjustment stages included in the adjustment unit is not limited. For example, when the adjustment unit is configured to adjust the relative pose between the first lens module and the second lens module, the first lens module and the second lens module may be respectively adjusted by using two three-dimensional adjustment stages, or the first lens module and the second lens module may be respectively adjusted by using two six-dimensional adjustment stages, or the first lens module and the second lens module may be adjusted by using one six-dimensional adjustment stage, or the first lens module and the second lens module may be respectively adjusted by using one six-dimensional adjustment stage and one three-dimensional adjustment stage. Various positions can be adjusted by using the six-dimensional adjustment stage or the three-dimensional adjustment stage, so that cycle time of a coupling process of an optical product is shortened, and assembly efficiency and units per hour of the optical product are improved.

In a possible implementation, the imaging unit includes an imaging optical element and an image sensor. The imaging optical element includes a long-focus lens or a collimator, and the image sensor is configured to generate an image based on a light beam collected by the imaging optical element.

In the foregoing implementation, the imaging unit includes the imaging optical element and the image sensor. The imaging optical element includes the long-focus lens or the collimator, and both have a high magnification ratio, so that the light beam reflected by the first optoelectronic chip and/or the light beam reflected by the second optoelectronic chip can be obtained, and interference caused by a stray light beam to the light beam reflected by the first optoelectronic chip and/or the light beam reflected by the second optoelectronic chip can be reduced. In this way, the image sensor can clearly image the light spot on the first optoelectronic chip and the light spot on the second optoelectronic chip. This facilitates accurate control of the control unit, and helps shorten time consumed for coupling the first lens module to the second lens module.

Optionally, an angular resolution A of the imaging optical element and an angular resolution B of the first optical element satisfy the following relationship: A≥10B. Similarly, the angular resolution A of the imaging optical element and an angular resolution C of the second optical element satisfy the following relationship: A≥10C.

Optionally, the image sensor is a high-resolution and low-illumination detector.

Optionally, an imaging optical element with an appropriate magnification ratio may be selected based on one or more of the following: for example, specifications (for example, angular resolutions) of the first optical element and the second optical element, and pixel sizes of the first optoelectronic chip and the second optoelectronic chip.

In a possible implementation, the illumination unit includes any one or more of the following: an optical fiber, an optical fiber, frosted glass, or a reflector.

In the foregoing implementation, the illumination unit includes any one or more of the following: the optical fiber, the optical fiber, the frosted glass, or the reflector. For example, the optical fiber and the frosted glass can form a flood light source, and then the reflector can reflect a light beam to the first optoelectronic chip and/or the second optoelectronic chip. For another example, the optical fiber can directly provide a light source for the first optoelectronic chip and/or the second optoelectronic chip. The optical fiber, the optical fiber, the frosted glass, or the reflector has low costs and simple operations. This helps reduce costs of the coupling platform.

According to a third aspect, this application provides a coupling method, including: receiving a light beam that passes through a first optical element, generating a first image, and adjusting a relative pose between a first optoelectronic chip and the first optical element based on the first image. The first optoelectronic chip is placed under an illumination condition, and the first image includes an image of a light spot on the first optoelectronic chip.

The coupling method provided in this application may be applied to the coupling platform shown in the first aspect.

In a possible implementation, adjusting the relative pose between the first optoelectronic chip and the first optical element includes: adjusting a spatial position of the first optoelectronic chip and/or a spatial position of the first optical element.

In a possible implementation, the method further includes: receiving a light beam that passes through a second optical element, and generating a second image, where the second image includes an image of a light spot on a second optoelectronic chip, and the first optoelectronic chip is placed under an illumination condition; and adjusting a relative pose between the second optoelectronic chip and the second optical element based on the first image and the second image.

In a possible implementation, adjusting the relative pose between the second optoelectronic chip and the second optical element includes: adjusting a spatial position of the second optoelectronic chip and/or a spatial position of the second optical element.

In a possible implementation, the first optoelectronic chip is an optical transmitter chip, and the second optoelectronic chip is an optical receiver chip. Alternatively, both the first optoelectronic chip and the second optoelectronic chip are optical transmitter chips. Alternatively, both the first optoelectronic chip and the second optoelectronic chip are optical receiver chips.

In a possible implementation, the first optoelectronic chip is rigidly connected to the second optoelectronic chip, and/or the first optical element is rigidly connected to the second optical element.

For beneficial effects of the third aspect and any possible implementation, refer to the beneficial effects of the corresponding implementations in the first aspect. Details are not described herein again.

According to a fourth aspect, this application provides a coupling method. The method is used to couple a first lens module to a second lens module, the first lens module includes a first optoelectronic chip and a first optical element, and the second lens module includes a second optoelectronic chip and a second optical element. The method includes: receiving a light beam that passes through the first optical element and a light beam that passes through the second optical element, and separately generating a first image and a second image, where the first image includes an image of a light spot on the first optoelectronic chip, the second image includes an image of a light spot on the second optoelectronic chip, and the first optoelectronic chip and the second optoelectronic chip are placed under an illumination condition; and adjusting a relative pose between the first lens module and the second lens module based on the first image and the second image.

In a possible implementation, adjusting the relative pose between the first lens module and the second lens module includes: an adjustment unit, configured to adjust a spatial position of the first lens module and/or a spatial position of the second lens module.

In a possible implementation, the first lens module is an optical transmitter module, and the second lens module is an optical receiver module.

For beneficial effects of the fourth aspect and any possible implementation, refer to the beneficial effects of the corresponding implementations in the second aspect. Details are not described herein again.

According to a fifth aspect, this application provides a coupling apparatus. The coupling apparatus includes at least one coupling platform shown in the first aspect or at least one coupling platform shown in the second aspect.

In a possible implementation, the coupling apparatus is configured to perform the method according to either of the third aspect and the fourth aspect and any possible implementation.

According to a sixth aspect, this application provides a coupling apparatus. The apparatus includes a processor and a memory. The memory is configured to store a computer program, and the processor is configured to execute the computer program, so that the coupling apparatus performs the method according to either of the third aspect and the fourth aspect and any possible implementation.

According to a seventh aspect, this application provides a computer-readable storage medium. The computer-readable storage medium is configured to store a computer program (which may also be referred to as code or instructions). When the computer program is run on a computer, the method according to either of the third aspect and the fourth aspect and any possible implementation is performed.

According to an eighth aspect, this application provides a computer program product. The computer program product includes a computer program (which may also be referred to as code or instructions). When the computer program is run, a computer is enabled to perform the method according to either of the third aspect and the fourth aspect and any possible implementation.

According to a ninth aspect, this application provides a chip. The chip includes a processor. The processor is configured to execute instructions. When the processor executes the instructions, the chip is enabled to perform the method according to either of the third aspect and the fourth aspect and any possible implementation.

According to a tenth aspect, this application provides a terminal device. The terminal device includes at least one coupling platform according to the first aspect, or at least one coupling platform according to the second aspect, or at least one coupling apparatus according to the fifth aspect, or at least one coupling apparatus according to the sixth aspect, or at least one chip according to the ninth aspect.

In this application, the coupling platform is provided, and the coupling platform includes the imaging unit, the control unit, and the adjustment unit. The imaging unit receives the light beam that passes through the first optical element and generates the first image, where the first image includes the image of the light spot on the first optoelectronic chip. The control unit controls the adjustment unit based on the obtained first image, so that the adjustment unit adjusts the relative pose between the first optoelectronic chip and the first optical element, so as to complete coupling between the first optoelectronic chip and the first optical element. The foregoing coupling platform simply requires the control unit to control the adjustment unit based on the first image and then the adjustment unit to execute a corresponding control instruction to adjust the relative pose between the first optoelectronic chip and the first optical element, achieving coupling between the first optoelectronic chip and the first optical element . This eliminates the need for complex power-on and power-off processes, streamlining operations and taking short time, while allowing for automatic coupling between the first optoelectronic chip and the first optical element. Therefore, it reduces cycle time of a coupling process of the optical product, enhances assembly efficiency, and increases units per hour of the optical product.

### BRIEF DESCRIPTION OF DRAWINGS

To describe the technical solutions in this application more clearly, the following briefly describes the accompanying drawings used in this application. It is clear that, the accompanying drawings described below show merely some embodiments of this application, and a person of ordinary skill in the art may still derive other drawings from these accompanying drawings without creative efforts.
FIG. 1 is a diagram of a coupling platform according to an embodiment of this application;
FIG. 2 is a diagram of another coupling platform according to an embodiment of this application;
FIG. 3 is a diagram of another coupling platform according to an embodiment of this application;
FIG. 4 is a diagram of another coupling platform according to an embodiment of this application;
FIG. 5 is a diagram of another coupling platform according to an embodiment of this application;
FIG. 6 is a diagram of another coupling platform according to an embodiment of this application;
FIG. 7 is a diagram of a coordinate system according to an embodiment of this application;
FIG. 8A is a diagram of measuring image definition according to an embodiment of this application;
FIG. 8B is a diagram of an image of a light spot on an optoelectronic chip according to an embodiment of this application;
FIG. 8C is a diagram of a through-focus curve according to an embodiment of this application;
FIG. 9A is a diagram of an illumination unit according to an embodiment of this application;
FIG. 9B is a diagram of another illumination unit according to an embodiment of this application;
FIG. 10 is a diagram of a coupling method according to an embodiment of this application;
FIG. 11A is a diagram of a coupling process according to an embodiment of this application;
FIG. 11B is a diagram of another coupling process according to an embodiment of this application;
FIG. 12A is a diagram of another coupling process according to an embodiment of this application;
FIG. 12B is a diagram of imaging according to an embodiment of this application;
FIG. 12C is a diagram of another coupling process according to an embodiment of this application;
FIG. 13 is a diagram of another coupling method according to an embodiment of this application;
FIG. 14 is a diagram of another coupling method according to an embodiment of this application;
FIG. 15A is a diagram of another coupling process according to an embodiment of this application;
FIG. 15B is another diagram of imaging according to an embodiment of this application;
FIG. 15C is another diagram of imaging according to an embodiment of this application;
FIG. 16A is a diagram of another coupling process according to an embodiment of this application;
FIG. 16B is another diagram of imaging according to an embodiment of this application;
FIG. 16C is another diagram of imaging according to an embodiment of this application;
FIG. 16D is another diagram of imaging according to an embodiment of this application;
FIG. 17A is another diagram of imaging according to an embodiment of this application; and
FIG. 17B is another diagram of imaging according to an embodiment of this application.

### DESCRIPTION OF EMBODIMENTS

To make objectives, technical solutions, and advantages of this application clearer, the following describes this application with reference to accompanying drawings in this application.

The terms "first", "second", and the like in the specification, claims, and accompanying drawings of this application are used to distinguish between different objects, but are not used to describe a sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this specification means that features, structures, or characteristics described with reference to the embodiment may be included in at least one embodiment of this application. Appearance of the phrase at various positions in the specification does not necessarily refer to a same embodiment, or an independent or alternative embodiment mutually exclusive with another embodiment. A person skilled in the art may explicitly and implicitly understand that the embodiments described in this specification may be combined with other embodiments.

It should be understood that, in this application, "at least one (piece)" refers to one or more, "a plurality of" refers to two or more, "at least two (pieces)" refers to two, three, or more, and "and/or" is used to describe an association relationship of associated objects, and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

To describe the solutions of this application more clearly, some technical terms related to the following are first described below.

### 1. Through-focus (through-focus) curve

The through-focus curve is a curve of each marked pattern drawn based on measured data, where the measured data is resolution data of each marked pattern on a reticle corresponding to each axial distance (distance in a direction of an optical axis), and the resolution data is measured by changing an axial distance between an optical element on a test optical path (optical element for short) and an optoelectronic chip (photosensitive chip). In other words, a measured through-focus curve corresponding to each marked pattern can be measured. In the measured through-focus curve, a horizontal coordinate may represent the axial distance, and a vertical coordinate may represent the resolution data, for example, a spatial frequency response (spatial frequency response, SFR) value or a modulation transfer function (modulation transfer function, MTF) value. Briefly, the through-focus curve is a curve indicating image definition and deviation of the optoelectronic chip from an optimal focal length. A horizontal axis may be set to a value of the deviation of the optoelectronic chip from the optimal focal length, and a vertical axis may be set to a value of the image definition.

In some scenarios, because the optoelectronic chip has a pattern, a corresponding image may be obtained by imaging a light beam transmitted by the optoelectronic chip. Therefore, the through-focus curve of the optical element and the optoelectronic chip may be obtained without using a reticle.

### 2. Relative pose

The relative pose means a relative position and a relative attitude between two objects. The relative position between the two objects may be understood as a relative position between the two objects in space. The relative attitude may be understood as a relative attitude between the two objects. Using an optical element and an optoelectronic chip as an example, a relative attitude between the two is adjusted, so that optical axes of the two may overlap, be parallel, intersect, not intersect, or the like. Adjusting the relative position between the two objects may be adjusting a position and/or a attitude of one of the objects, or may be simultaneously adjusting positions and/or attitudes of the two objects. Position and/or attitude adjustment manners include translation, rotation, and the like.

### 3. Optoelectronic chip

The optoelectronic chip includes an optical transmitter chip and/or an optical receiver chip.

In a possible implementation, the optical transmitter chip includes one or more of the following light sources: vertical cavity surface emitting laser (vertical cavity surface emitting laser, VCSEL), photonic crystal surface emitting laser (photonic crystal surface emitting semiconductor laser, PCSEL), edge emitting laser (edge emitting laser, EEL), laser diode (laser diode, LD), distributed feedback laser diode (distributed feedback LD, DFB-LD), grating coupled sampling reflection laser diode (Grating coupled sampling reflection LD, GCSR-LD), micro-opto-electro-mechanical system laser diode (micro-opto-electro-mechanical system LD, MOEMS-LD), or the like. For example, the optical transmitter chip includes one or more VCSEL chips, or the optical transmitter chip includes a plurality of EEL chips.

In a possible implementation, the optical receiver chip includes a detector and/or an image sensor. The detector is configured to obtain a point cloud and/or ranging information. The ranging information is, for example, TOF information. The detector is also referred to as a radar detector, a ranging detector, or the like in some solutions. For example, the detector includes one or more of the following detection units: a single-photon avalanche diode (single-photon avalanche diode, SPAD), a silicon photomultiplier (Silicon photomultiplier, SiPM), a multi-pixel photon counter (multi-pixel photon counter, MPPC), a semiconductor avalanche photodiode (avalanche photodiode, APD), a "positive-intrinsic-negative" (positive-intrinsic-negative, PIN)-type diode (or referred to as a P-type semiconductor-impurity-N-type semiconductor diode), or the like. When the detector includes a plurality of detection units, the plurality of detection units may be arranged in an array to form an array detector. For example, a receiving module includes an SPAD array detector. The image sensor includes one or more of the following photosensitive elements: a complementary metal oxide semiconductor (complementary metal oxide semiconductor, CMOS), a charge coupled device (charge coupled device, CCD), a Live MOS, or the like. For example, the image sensor includes a CMOS image sensor (CMOS image sensor, CIS), and the CIS is configured to convert an optical image into an electronic signal.

The foregoing descriptions of the technical terms are optionally used in the following embodiments.

As described in the background, an AA process of an optical product includes processes such as material loading, powering on (for example, lighting up a TX/RX board), calibration, and material unloading. The power-on process is difficult and time-consuming, and is difficult to automate. This application provides a coupling platform, a coupling method, and a related apparatus, and relates to the field of optoelectronics. This eliminates the need for complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

The following describes this application with reference to the accompanying drawings.

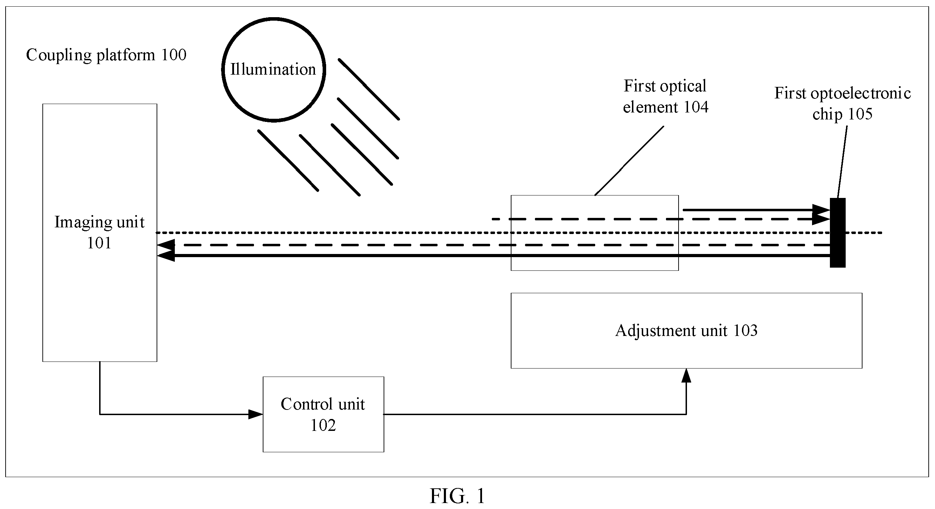

Refer to FIG. 1. FIG. 1 is a diagram of a coupling platform according to an embodiment of this application. The coupling platform 100 includes an imaging unit 101, a control unit 102, and an adjustment unit 103. The coupling platform 100 is configured to couple a first optical element 104 to a first optoelectronic chip 105. As shown in FIG. 1, the first optical element 104 and the first optoelectronic chip 105 may be disposed on the coupling platform 100. Further, the first optical element 104 and/or the first optoelectronic chip may be disposed on the adjustment unit 103.

The first optoelectronic chip 105 is placed under an illumination condition. In some solutions, the first optoelectronic chip 105 may be patternized. In this case, when the first optoelectronic chip 105 is placed under the illumination condition, a pattern on the first optoelectronic chip 105 may be illuminated. Optionally, the illumination condition herein may be provided by a natural light source or an artificial light source.

The first optical element 104 is disposed between the first optoelectronic chip 105 and the imaging unit 101. For example, the first optical element 104 includes one or more lenses. For another example, the first optical element 104 may be an imaging lens. In some solutions, the first optical element 104 may be configured to perform imaging. For example, the first optical element 104 is an imaging lens having a convergence function. After a light beam passes through the first optical element 104 from an object side, the light beam may be converged and imaged on another side of the first optical element 104. It is not difficult to understand that, because the first optoelectronic chip 105 is placed under the illumination condition, when a light beam from the first optoelectronic chip 105 passes through the first optical element 104, the light beam may be imaged on the imaging unit 101.

The imaging unit 101 is configured to receive a light beam and perform imaging based on the received light beam. For a definition and a possible implementation of the imaging unit 101, refer to the following detailed descriptions of the imaging unit. For example, the imaging unit 101 may be an image sensor, for example, a contact image sensor (contact image sensor, CIS), an RGB sensor, or a monosensor. In a possible implementation, the light beam received by the imaging unit 101 includes a light beam reflected by the pattern on the first optoelectronic chip 105. Therefore, a first image generated by the imaging unit 101 includes an image of a light spot on the first optoelectronic chip 105.

The control unit 102 is configured to control the adjustment unit 103. For a definition and a possible implementation of the control unit 102, refer to the following detailed descriptions of the control unit. In a possible implementation, the control unit 102 may control the adjustment unit 103 based on the first image. For example, the control unit 102 generates a corresponding control instruction by analyzing the image of the light spot on the first optoelectronic chip 105, to control the adjustment unit 103. For example, the control unit 102 generates, by analyzing definition of the image of the light spot on the first optoelectronic chip 105, a control instruction for adjusting a relative distance between the first optical element 104 and the first optoelectronic chip 105, to control the adjustment unit 103, so that the adjustment unit 103 adjusts the relative distance between the first optical element 104 and the first optoelectronic chip 105. For a implementation, refer to the following related descriptions.

The adjustment unit 103 is configured to adjust a relative pose between the first optical element 104 and the first optoelectronic chip 105. For a definition and a possible implementation of the adjustment unit 103, refer to the following detailed descriptions of the adjustment unit. Optionally, the adjustment unit 103 may adjust a position and/or a attitude of the first optical element 104 and/or a position and/or a attitude of the first optoelectronic chip 105, and the like. For example, the adjustment unit 103 adjusts, based on the control instruction of the control unit 102, the relative pose between the first optoelectronic chip 105 and the first optical element 104, so that the first image generated by the imaging unit 101 includes a clear and complete image of the light spot on the first optoelectronic chip 105, thereby achieving coupling between the first optical element 104 and the first optoelectronic chip 105.

Briefly, the foregoing coupling platform simply requires the control unit to control the adjustment unit based on the first image and then the adjustment unit to execute a corresponding control instruction to adjust the relative pose between the first optoelectronic chip and the first optical element, achieving coupling between the first optoelectronic chip and the first optical element. This eliminates the need for complex power-on and power-off processes, streamlining operations and taking short time, while allowing for automatic coupling between the first optoelectronic chip and the first optical element. Therefore, it reduces cycle time of an assembly process of the optical product, enhances assembly efficiency, and increases units per hour of the optical product.

For ease of understanding of the following descriptions, the following brief description is provided: An image that is of an illuminated pattern on an optoelectronic chip and that is formed in an imaging unit is referred to as an image of a light spot on the optoelectronic chip. For example, an image that is of an illuminated pattern on the first optoelectronic chip 105 and that is formed in the imaging unit is referred to as an image of a light spot on the first optoelectronic chip 105. For another example, an image that is of an illuminated pattern on a second optoelectronic chip 107 and that is formed in the imaging unit is referred to as an image of a light spot on the second optoelectronic chip 107 below. For ease of understanding, in the following, the "image of the light spot on the first optoelectronic chip 105" may be briefly referred to as an "image A", and the "image of the light spot on the second optoelectronic chip 107" may be briefly referred to as an "image B".

An optical path on the coupling platform 100 includes the following two cases.

Case 1: A light beam passing through the first optical element 104 illuminates the first optoelectronic chip 105. A light beam reflected by the pattern on the first optoelectronic chip 105 passes through the first optical element 104 again, and is received by the imaging unit 101. This is shown by dashed lines with arrows in FIG. 1.

Case 2: A light beam directly illuminates the first optoelectronic chip 105 without passing through the first optical element 104, and a light beam reflected by the pattern on the first optoelectronic chip 105 passes through the first optical element 104, and is received by the imaging unit 101. This is shown by solid lines with arrows in FIG. 1.

In a possible implementation, the coupling platform 100 further includes an illumination unit, and the illumination unit is configured to provide an illumination light beam for the first optoelectronic chip 105. For a definition and a possible implementation of the illumination unit, refer to the following detailed descriptions of the illumination unit.

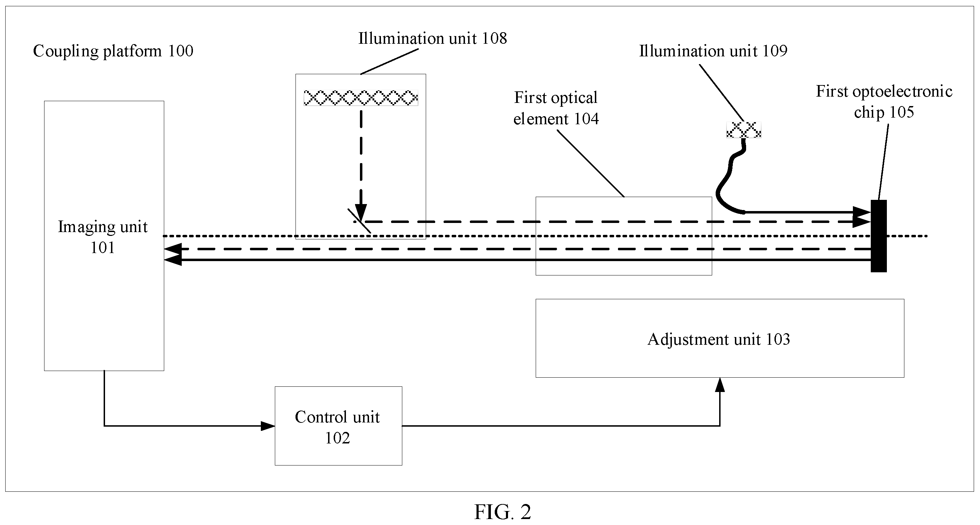

Refer to FIG. 2. FIG. 2 is a diagram of another coupling platform according to an embodiment of this application. The coupling platform 100 includes an imaging unit 101, a control unit 102, an adjustment unit 103, and an illumination unit. The illumination unit is an illumination unit 108 and/or an illumination unit 109 shown in FIG. 2.

In a possible illumination design, after a light beam provided by the illumination unit 108 passes through a first optical element 104, a first optoelectronic chip 105 is illuminated, and a light beam reflected by a pattern on the first optoelectronic chip 105 passes through the first optical element 104 again, and is received by the imaging unit 101.

In another possible illumination design, a light beam provided by the illumination unit 109 directly illuminates a first optoelectronic chip 105 without passing through a first optical element 104, and a light beam reflected by a pattern on the first optoelectronic chip 105 passes through the first optical element 104, and is received by the imaging unit 101.

Certainly, the foregoing two illumination designs may further be combined. For example, the coupling platform 100 includes both the illumination unit 108 and the illumination unit 109, to provide sufficient illumination for the first optoelectronic chip 105, so that the imaging unit 101 generates a clear image A.

In a manner in which the illumination unit provides an illumination light beam for the first optoelectronic chip 105, the pattern on the first optoelectronic chip 105 can be clearly illuminated, and a case in which the first optoelectronic chip 105 is not evenly illuminated is avoided, so that the imaging unit 101 can generate a clear image A. This facilitates accurate control of the control unit 102, and helps shorten time consumed for coupling the first optoelectronic chip 105 to the first optical element 104.

The coupling platforms 100 provided in FIG. 1 and FIG. 2 can couple a set of optical products at the same time, for example, the first optical element 104 and the first optoelectronic chip 105. To further improve assembly efficiency of an optical product, this application provides another coupling platform, to couple two sets of optical products at the same time, thereby improving assembly efficiency and units per hour of the optical products.

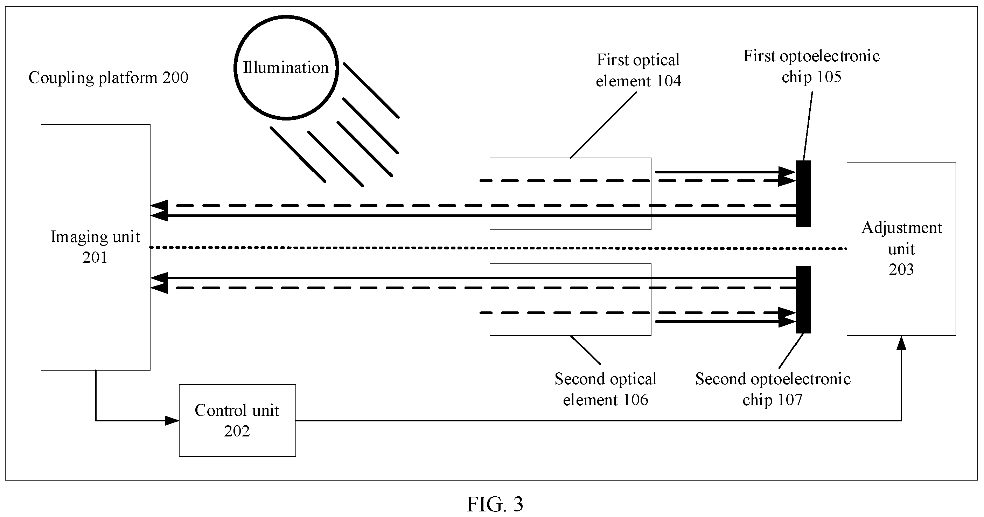

Refer to FIG. 3. FIG. 3 is a diagram of another coupling platform according to an embodiment of this application. The coupling platform 200 includes an imaging unit 201, a control unit 202, and an adjustment unit 203. In addition to being configured to couple a first optical element 104 to a first optoelectronic chip 105, the coupling platform is further configured to couple a second optical element 106 to a second optoelectronic chip 107. As shown in FIG. 3, the first optical element 104, the first optoelectronic chip 105, the second optical element 106, and the second optoelectronic chip 107 may be disposed on the coupling platform 200. Further, one or more of the first optical element 104, the first optoelectronic chip 105, the second optical element 106, and the second optoelectronic chip 107 may be disposed on the adjustment unit 203.

The first optoelectronic chip 105 and the second optoelectronic chip 107 are placed under an illumination condition. In some solutions, the first optoelectronic chip 105 and the second optoelectronic chip 107 may be patternized. In this case, when the first optoelectronic chip 105 and the second optoelectronic chip 107 are placed under the illumination condition, patterns on the first optoelectronic chip 105 and the second optoelectronic chip 107 may be illuminated. Optionally, the illumination condition herein may be provided by a natural light source or an artificial light source.

The first optical element 104 is disposed between the first optoelectronic chip 105 and the imaging unit 201, and the second optical element 106 is disposed between the second optoelectronic chip 107 and the imaging unit 201. For example, the first optical element 104 and the second optical element 106 each include one or more lenses. For another example, the first optical element 104 and the second optical element 106 may be imaging lenses. In some solutions, the first optical element 104 and the second optical element 106 may be configured to perform imaging. For example, the first optical element 104 and the second optical element 106 are imaging lenses having a convergence function. After a light beam passes through the first optical element 104 from an object side, the light beam may be converged and imaged on another side of the first optical element 104. Similarly, after a light beam passes through the second optical element 106 from an object side, the light beam may be converged and imaged on another side of the second optical element 106. It is not difficult to understand that, because the first optoelectronic chip 105 and the second optoelectronic chip 107 are placed under the illumination condition, when a light beam from the first optoelectronic chip 105 passes through the first optical element 104, the light beam may be imaged on the imaging unit 201. Similarly, when a light beam from the second optoelectronic chip 107 passes through the second optical element 106, the light beam may also be imaged on the imaging unit 201.

Optionally, the first optoelectronic chip 105 is an optical transmitter chip, and the second optoelectronic chip 107 is an optical receiver chip; or the first optoelectronic chip 105 is an optical receiver chip, and the second optoelectronic chip 107 is an optical transmitter chip; or both the first optoelectronic chip 105 and the second optoelectronic chip 107 are optical transmitter chips; or both the first optoelectronic chip 105 and the second optoelectronic chip 107 are optical receiver chips. Correspondingly, when the first optoelectronic chip 105 includes an optical transmitter chip, the first optical element 104 includes an optical transmitter system (optical transmitter lens). When the first optoelectronic chip 105 includes an optical receiver chip, the first optical element 104 includes an optical receiver system (optical receiver lens). When the second optoelectronic chip 107 is an optical transmitter chip, the second optical element 106 is an optical transmitter system (optical transmitter lens). When the second optoelectronic chip 107 is an optical receiver chip, the second optical element 106 is an optical receiver system (optical receiver lens).

The imaging unit 201 is configured to receive a light beam and perform imaging based on the received light beam. For a definition and a possible implementation of the imaging unit 201, refer to the following detailed descriptions of the imaging unit. For example, the imaging unit 201 may be an image sensor, for example, a CIS, an RGB sensor, or a monosensor. In a possible implementation, the light beam received by the imaging unit 201 includes a light beam reflected by the pattern on the first optoelectronic chip 105. Therefore, a first image generated by the imaging unit 201 includes an image A. In another possible implementation, the light beam received by the imaging unit 201 includes a light beam reflected by the pattern on the second optoelectronic chip 107. Therefore, a second image generated by the imaging unit 201 includes an image B.

The control unit 202 is configured to control the adjustment unit 203. For a definition and a possible implementation of the control unit 202, refer to the following detailed descriptions of the control unit. In a possible implementation, the control unit 202 may control the adjustment unit 203 based on the first image. For example, the control unit 202 generates a corresponding control instruction by analyzing the image A, to control the adjustment unit 203. For example, the control unit 202 generates, by analyzing definition of the image A, a control instruction for adjusting a relative distance between the first optical element 104 and the first optoelectronic chip 105, to control the adjustment unit 203, so that the adjustment unit 203 adjusts the relative distance between the first optical element 104 and the first optoelectronic chip 105. For a implementation, refer to the following related descriptions. In another possible implementation, the control unit 202 may control the adjustment unit 203 based on the second image. For example, the control unit 202 generates a corresponding control instruction by analyzing the image B, to control the adjustment unit 203. For example, the control unit 202 generates, by analyzing definition of the image B, a control instruction for adjusting a relative distance between the second optical element 106 and the second optoelectronic chip 107, to control the adjustment unit 203, so that the adjustment unit 203 adjusts the relative distance between the second optical element 106 and the second optoelectronic chip 107. For a implementation, refer to the following related descriptions. In another possible implementation, the control unit 202 may control the adjustment unit 203 based on the first image and the second image. For example, a lens module obtained by coupling the first optical element 104 to the first optoelectronic chip 105 is referred to as a first lens module, and a lens module obtained by coupling the second optical element 106 to the second optoelectronic chip 107 is referred to as a second lens module. The control unit 202 controls the adjustment unit 203 by analyzing the image A and the image B. For example, the control unit generates, by analyzing a relative position between the image A and the image B, a control instruction for adjusting a relative pose between the first lens module and the second lens module, to control the adjustment unit 203, so that the adjustment unit 203 adjusts a relative pose between the first optical element 104 and the first optoelectronic chip 105 and/or a relative pose between the second optical element 106 and the second optoelectronic chip 107, to make the image A coincide with the image B, thereby achieving coupling between the first lens module and the second lens module. For a implementation, refer to the following related descriptions.

A difference between the adjustment unit 203 and the adjustment unit 103 lies in that the adjustment unit 203 can simultaneously adjust relative poses between optical elements and optoelectronic chips in a plurality sets of optical products, so that assembly efficiency of the optical products and units per hour of the optical products are improved.

The adjustment unit 203 is configured to adjust the relative pose between the first optical element 104 and the first optoelectronic chip 105 and/or the relative pose between the second optical element 106 and the second optoelectronic chip 107. For a definition and a possible implementation of the adjustment unit 203, refer to the following detailed descriptions of the adjustment unit. In a possible implementation, the adjustment unit 203 may adjust a position and/or a attitude of the first optical element 104 and/or a position and/or a attitude of the first optoelectronic chip 105, and the like. For example, the adjustment unit 203 adjusts, based on the control instruction of the control unit 202, the relative pose between the first optical element 104 and the first optoelectronic chip 105, so that the first image generated by the imaging unit 201 includes a clear and complete image A, thereby achieving coupling between the first optical element 104 and the first optoelectronic chip 105. In another possible implementation, the adjustment unit 203 may adjust a position and/or a attitude of the second optical element 106 and/or a position and/or a attitude of the second optoelectronic chip 107, and the like. For example, the adjustment unit 203 adjusts, based on the control instruction of the control unit 202, the relative pose between the second optical element 106 and the second optoelectronic chip 107, so that the second image generated by the imaging unit 201 includes a clear and complete image B, thereby achieving coupling between the second optical element 106 and the second optoelectronic chip 107.

Briefly, the foregoing coupling platform simply requires the control unit to control the adjustment unit based on the first image and the second image and then the adjustment unit to execute the corresponding control instruction to adjust the relative pose between the first optoelectronic chip and the first optical element and adjust the relative pose between the second optoelectronic chip and the second optical element, achieving coupling between the first optoelectronic chip and the first optical element and coupling between the second optoelectronic chip and the second optical element. This eliminates the need for complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

An optical path on the coupling platform 200 includes the following two cases.

Case 1: A light beam passing through the first optical element 104 illuminates the first optoelectronic chip 105, and a light beam reflected by the pattern on the first optoelectronic chip 105 passes through the first optical element 104 again, and is received by the imaging unit 201. A light beam passing through the second optical element 106 illuminates the second optoelectronic chip 107, and a light beam reflected by the pattern on the second optoelectronic chip 107 passes through the second optical element 106 again, and is received by the imaging unit 201. This is shown by dashed lines with arrows in FIG. 3.

Case 2: A light beam directly illuminates the first optoelectronic chip 105 without passing through the first optical element 104, and a light beam reflected by the pattern on the first optoelectronic chip 105 passes through the first optical element 104, and is received by the imaging unit 201. A light beam directly illuminates the second optoelectronic chip 107 without passing through the second optical element 106, and a light beam reflected by the pattern on the second optoelectronic chip 107 passes through the second optical element 106, and is received by the imaging unit 201. This is shown by solid lines with arrows in FIG. 3.

In a possible implementation, the coupling platform 200 further includes an illumination unit, and the illumination unit is configured to provide an illumination light beam for the first optoelectronic chip 105 and the second optoelectronic chip 107. For a definition and a possible implementation of the illumination unit, refer to the following detailed descriptions of the illumination unit.

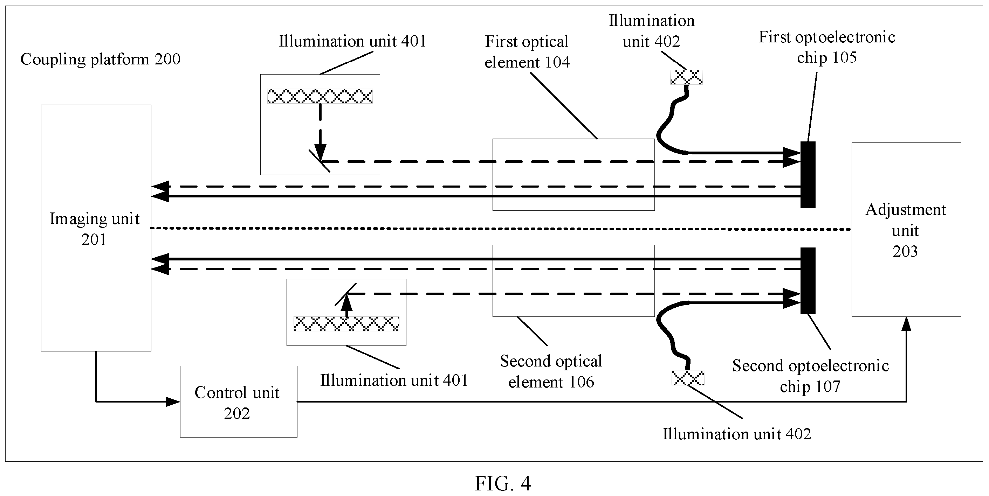

Refer to FIG. 4. FIG. 4 is a diagram of another coupling platform according to an embodiment of this application. The coupling platform 200 includes an imaging unit 201, a control unit 202, an adjustment unit 203, and an illumination unit. The illumination unit is an illumination unit 401 and/or an illumination unit 402 shown in FIG. 4.

In a possible illumination design, a light beam provided by the illumination unit 401 passes through a first optical element 104 and illuminates a first optoelectronic chip 105, and a light beam reflected by a pattern on the first optoelectronic chip 105 passes through the first optical element 104 again, and is received by the imaging unit 201. A light beam provided by the illumination unit 401 further passes through a second optical element 106 and illuminates a second optoelectronic chip 107, and a light beam reflected by a pattern on the second optoelectronic chip 107 passes through the second optical element 106 again, and is received by the imaging unit 201. It should be noted that, in a implementation process, the illumination unit may include two sets of light sources, and the two sets of light sources are respectively configured to illuminate the first optoelectronic chip 105 and the second optoelectronic chip 107. Alternatively, the illumination unit may include one set of light sources, and the light sources can simultaneously illuminate the first optoelectronic chip 105 and the second optoelectronic chip 107.

In another possible illumination design, a light beam provided by the illumination unit 402 directly illuminates a first optoelectronic chip 105 without passing through a first optical element 104, and a light beam reflected by a pattern on the first optoelectronic chip 105 passes through the first optical element 104, and is received by the imaging unit 201. A light beam provided by the illumination unit 402 directly illuminates a second optoelectronic chip 107 without passing through a second optical element 106, and a light beam reflected by a pattern on the second optoelectronic chip 107 passes through the second optical element 106, and is received by the imaging unit 201.

Certainly, the foregoing two illumination designs may further be combined. For example, the coupling platform 200 may further use both the illumination unit 401 and the illumination unit 402, to provide sufficient illumination for the first optoelectronic chip 105 and the second optoelectronic chip 107, so that the imaging unit 201 generates a clear image A and a clear image B.

In a manner in which the illumination unit provides an illumination light beam for the first optoelectronic chip 105 and the second optoelectronic chip 107, the patterns on the first optoelectronic chip 105 and the second optoelectronic chip 107 can be clearly illuminated, and a case in which the first optoelectronic chip 105 and the second optoelectronic chip 107 are not evenly illuminated is avoided, so that the imaging unit 201 can generate a clear image A and a clear image B. This facilitates accurate control of the control unit 202, and helps shorten time consumed for coupling the first optoelectronic chip 105 to the first optical element 104 and time consumed for coupling the second optoelectronic chip 107 to the second optical element 106.

Some devices include at least two lens modules. The device can normally operate (implement functions such as photographing and detection) only when the lens modules of the device are in a coupled state. The lens module is, for example, a module obtained by coupling an optical element to an optoelectronic chip. In other words, the optical element and the optoelectronic chip in the lens module are in an optimal coupled state. For example, a transmitter lens module and a receiver lens module of a lidar need to be placed at preset positions, to ensure that the lidar can normally operate. For example, it needs to be ensured that an optical axis of the transmitter lens module of the lidar is parallel to an optical axis of the receiver lens module of the lidar, to ensure normal operation of the lidar. Further, on the basis that the optical axes of the transmitter lens module and the receiver lens module are parallel, it further needs to be ensured that an interval between the transmitter lens module and the receiver lens module is a preset value (for example, the interval is less than 3 mm).

In view of this, this application provides a diagram of another coupling platform, configured to couple a first lens module to a second lens module.

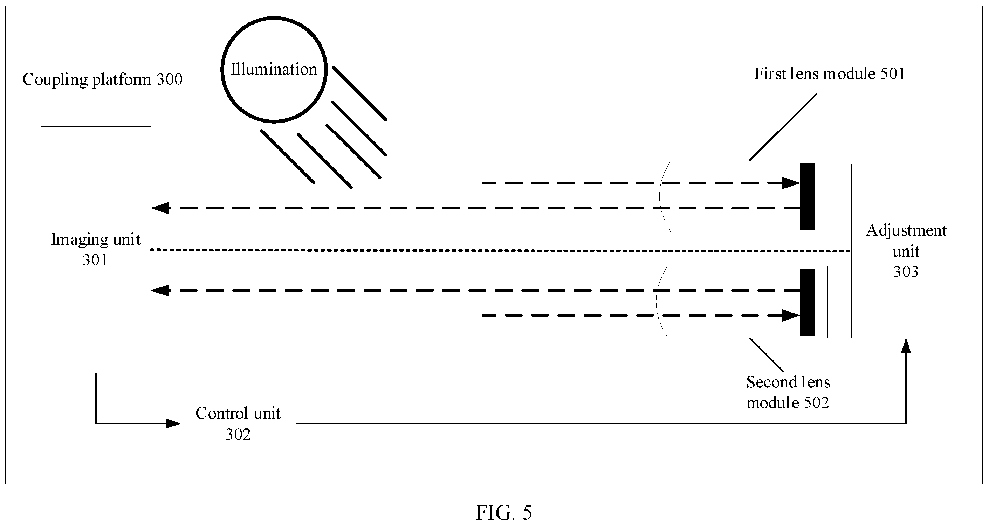

As shown in FIG. 5, a coupling platform 300 includes an imaging unit 301, a control unit 302, and an adjustment unit 303. The coupling platform 300 is configured to couple a first lens module 501 to a second lens module 502. As shown in FIG. 5, the first lens module 501 and the second lens module 502 may be disposed on the coupling platform 300. Further, the first lens module 501 and/or the second lens module 502 may be disposed on the adjustment unit 303.

The first lens module 501 is obtained by coupling a third optical element to a third optoelectronic chip, and the second lens module 502 is obtained by coupling a fourth optical element to a fourth optoelectronic chip. The third optical element is, for example, the foregoing first optical element 104, and the third optoelectronic chip is, for example, the foregoing first optoelectronic chip 105. The fourth optical element is, for example, the foregoing second optical element 106, and the fourth optoelectronic chip is, for example, the foregoing second optoelectronic chip 107.

Optionally, the first lens module 501 is an optical transmitter module, and the second lens module 502 is a receiver lens module; or the first lens module 501 is an optical receiver module, and the second lens module 502 is a transmitter lens module. For example, the optical transmitter module is configured to generate and transmit a detection light beam, and the optical receiver module is configured to receive a light beam reflected by a target object.

The third optoelectronic chip and the fourth optoelectronic chip are placed under an illumination condition. In some solutions, the third optoelectronic chip and the fourth optoelectronic chip may be patternized. In this case, when the third optoelectronic chip and the fourth optoelectronic chip are placed under the illumination condition, patterns on the third optoelectronic chip and the fourth optoelectronic chip can be illuminated. Optionally, the illumination condition herein may be provided by a natural light source or an artificial light source.

A distance between the first lens module 501 and the imaging unit 301 is equal to a distance between the second lens module 502 and the imaging unit 301. For example, a distance between a center of mass of the first lens module 501 and a center of mass of the imaging unit 301 and a distance between a center of mass of the second lens module 502 and the center of mass of the imaging unit 301 may be set to be equal. For another example, a distance between a center of mass of the third optoelectronic chip and the center of mass of the imaging unit 301 is equal to a distance between a center of mass of the fourth optoelectronic chip and the center of mass of the imaging unit 301. The distance between the first lens module 501 and the imaging unit 301 and the distance between the second lens module 502 and the imaging unit 301 are controlled to be equal, so that sizes of images that are of light spots on the third optoelectronic chip and the fourth optoelectronic chip and that are generated by the imaging unit 301 can be equal. This facilitates appropriate control of the control unit 302, so that coupling between the first lens module 501 and the second lens module 502 is quickly completed. In a possible implementation, the control unit 302 adjusts a control position of the first lens module 501 and/or a control position of the second lens module 502 by controlling the adjustment unit, so that the sizes of the images of the light spots on the third optoelectronic chip and the fourth optoelectronic chip are equal.

Optionally, the imaging unit 301 is configured to receive a light beam and perform imaging based on the received light beam. For a definition and a possible implementation of the imaging unit 301, refer to the following detailed descriptions of the imaging unit. For example, the imaging unit 301 may be an image sensor, for example, a CIS, an RGB sensor, or a monosensor. In a possible implementation, the light beam received by the imaging unit 301 includes a light beam reflected by the pattern on the third optoelectronic chip. Therefore, a third image generated by the imaging unit 301 includes an image of a light spot on the third optoelectronic chip. In another possible implementation, the light beam received by the imaging unit 301 includes a light beam reflected by the pattern on the fourth optoelectronic chip. Therefore, a fourth image generated by the imaging unit 301 includes an image of a light spot on the fourth optoelectronic chip.

The control unit 302 is configured to control the adjustment unit 303. For a definition and a possible implementation of the control unit 302, refer to the following detailed descriptions of the control unit. In a possible implementation, the control unit 302 may control the adjustment unit 303 based on the third image and the fourth image. For example, the control unit 302 generates a corresponding control instruction by analyzing the image of the light spot on the third optoelectronic chip and the image of the light spot on the fourth optoelectronic chip, to control the adjustment unit 303. For example, the control unit 302 generates a control instruction by analyzing definition of the image of the light spot on the third optoelectronic chip and definition of the image of the light spot on the fourth optoelectronic chip, and the control instruction is used to control the adjustment unit 303, so that the adjustment unit 303 adjusts a spacing between the first lens module 501 and the imaging unit 301 and a spacing between the second lens module 502 and the imaging unit 301. For a implementation, refer to the following related descriptions.

The adjustment unit 303 is configured to adjust a relative pose between the first lens module 501 and the second lens module 502. For a definition and a possible implementation of the adjustment unit 303, refer to the following detailed descriptions of the adjustment unit. Optionally, the adjustment unit 303 may adjust positions and/or attitudes of the first lens module 501 and the second lens module 502, and the like. For example, the adjustment unit 303 adjusts the relative pose between the first lens module 501 and the second lens module 502 based on the control instruction of the control unit 302, so that the image of the light spot on the third optoelectronic chip and the image of the light spot on the fourth optoelectronic chip that are generated by the imaging unit 301 overlap, thereby achieving coupling between the first lens module 501 and the second lens module 502.

Briefly, the foregoing coupling platform simply requires the control unit to control the adjustment unit based on the third image and the fourth image and then the adjustment unit to execute a corresponding control instruction to adjust the relative pose between the first lens module and the second lens module, achieving coupling between the first lens module and the second lens module. This eliminates the need for complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

Following the foregoing names of the "image A" and the "image B", an image that is of an illuminated pattern on the third optoelectronic chip and that is formed in the imaging unit may be referred to as an image of a light spot on the third optoelectronic chip, "image C" for short. An image that is of an illuminated pattern on the fourth optoelectronic chip and that is formed in the imaging unit may be referred to as an image of a light spot on the fourth optoelectronic chip, "image D" for short.

An optical path on the coupling platform 300 is shown as follows: A light beam passes through the third optical element and illuminates the third optoelectronic chip, and a light beam reflected by the pattern on the third optoelectronic chip passes through the third optical element again, and is received by the imaging unit 301. A light beam passes through the fourth optical element and illuminates the fourth optoelectronic chip, and a light beam reflected by the pattern on the fourth optoelectronic chip passes through the fourth optical element again, and is received by the imaging unit 301. This is shown by dashed lines in FIG. 5.

In a possible implementation, the coupling platform 300 further includes an illumination unit, and the illumination unit is configured to provide an illumination light beam for the first lens module and the second lens module. The illumination unit is configured to provide an illumination light beam for the third optoelectronic chip included in the first lens module and the fourth optoelectronic chip included in the second lens module. For a definition and a possible implementation of the illumination unit, refer to the following detailed descriptions of the illumination unit.

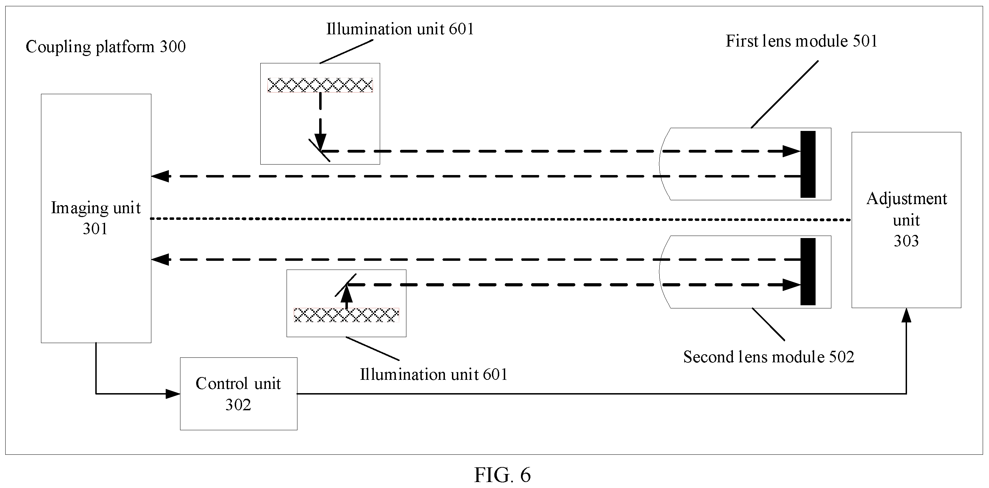

Refer to FIG. 6. FIG. 6 is a diagram of another coupling platform according to an embodiment of this application. The coupling platform 300 includes an imaging unit 301, a control unit 302, an adjustment unit 303, and an illumination unit 601.

As shown in FIG. 6, light beams provided by the illumination units 601 enter a first lens module 501 and a second lens module 502, and illuminate optoelectronic chips included in the first lens module 501 and the second lens module 502. Light beams reflected by images of light spots on the two optoelectronic chips are received by the imaging unit 301.

In a possible illumination design, when the first lens module 501 includes a third optical element and a third optoelectronic chip, and the second lens module 502 includes a fourth optical element and a fourth optoelectronic chip, an optical path on the coupling platform 300 is as follows: Light beams provided by the illumination units 601 pass through the third optical element and the fourth optical element, and are respectively received by the third optoelectronic chip and the fourth optoelectronic chip. Light beams reflected by images of light spots on the third optoelectronic chip and the fourth optoelectronic chip pass through the third optical element and the fourth optical element again, and are received by the imaging unit 301. The imaging unit 301 generates a third image and a fourth image, the third image includes an image C, and the fourth image includes an image D.

In a manner in which the illumination unit 601 provides an illumination light beam for the first lens module 501 and the second lens module 502, the patterns on the third optoelectronic chip included in the first lens module 501 and the fourth optoelectronic chip included in the second lens module 502 can be clearly illuminated, and a case in which the third optoelectronic chip and the fourth optoelectronic chip are not evenly illuminated is avoided, so that the imaging unit 301 can generate a clear image C and a clear image D. This facilitates accurate control of the control unit 302, and helps shorten time consumed for coupling the first lens module 501 to the second lens module 502.

To clearly describe how an adjustment unit adjusts a relative pose between an optical element and an optoelectronic chip, the relative pose mentioned above is further described with reference to the accompanying drawings.

A pose means a position and a attitude of an object in space. For example, the position is a position of the first optoelectronic chip 105 in space, or the position is a position of a center of mass of the first optoelectronic chip 105 in space. The attitude may be an orientation of the first optoelectronic chip 105 in space, or a direction of an optical axis of the first optoelectronic chip 105 in space. The relative pose means a relative position and a relative attitude between two objects. It is easy to understand that a relative pose between two objects may be generated based on poses of the two objects.

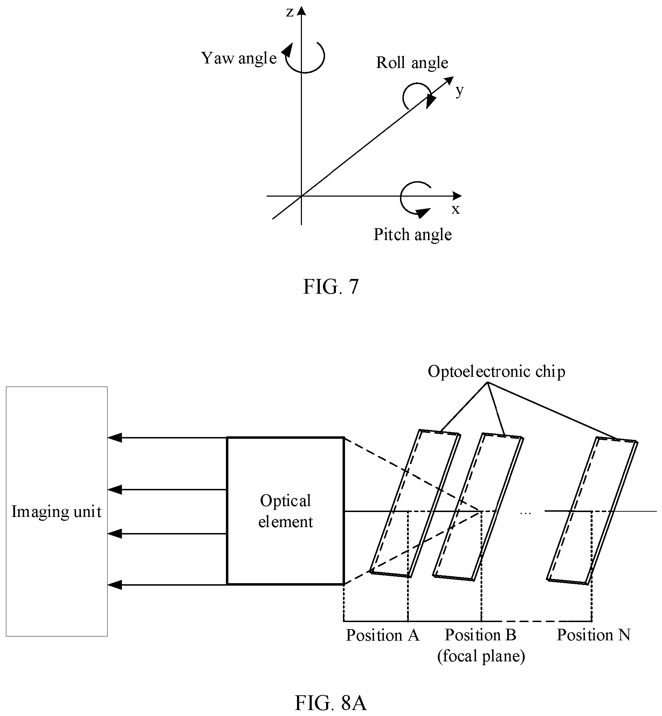

For example, a coordinate system may indicate a position and a attitude of an object in space. The coordinate system is, for example, a Cartesian coordinate system, a spherical coordinate system, or a cylindrical coordinate system. This is not limited in this application. For ease of understanding, an implementation of this application provides a possible coordinate system, as shown in FIG. 7.

Refer to FIG. 7. FIG. 7 is a diagram of a coordinate system according to an embodiment of this application. The coordinate system includes an x-axis, a y-axis, and a z-axis. An origin of the coordinate system and pointing directions of the x-axis, the y-axis, and the z-axis may be predefined.

A attitude of an optical product may be described based on an Euler (Euler) angle of the optical product relative to the coordinate system. For example, an optical product coordinate system is established by using a center of mass of the optical product as an origin, where an x-axis is parallel to an optical axis of the optical product and points to a light receiving direction (or a light transmitting direction), a y-axis is perpendicular to the optical axis of the optical product and points to a left side (or a right side) of the optical product, and a z-axis is perpendicular to the x-axis and points to an upper side (or a lower side) of the optical product. Rotation angles of the optical product around the three coordinate axes of the optical product coordinate system are respectively a pitch angle (x-axis), a roll angle (y-axis), and a yaw angle (z-axis). A relationship between the optical product and the coordinate system shown in FIG. 7 is three Euler angles, which reflect the attitude of the optical product relative to the coordinate system. The Euler angles are the simplest way to express rotation, and are a three-dimensional vector in form. Values of the Euler angles respectively represent rotation angles of an object around the three axes (the x-axis, the y-axis, and the z-axis) of the coordinate system, which are respectively referred to as a pitch angle (pitch angle), a roll angle (roll angle), and a yaw angle (yaw angle).

The optical product is, for example, the first optical element 104, the first optoelectronic chip 105, the second optical element 106, or the second optoelectronic chip 107. Optionally, the optical product may be alternatively a first lens module or a second lens module mentioned below.

For example, an optical product coordinate system is established by using a center of mass of the first optical element 104 as an origin. A relative pose between the first optical element 104 and the first optoelectronic chip 105 may be determined based on coordinate values (0, 0, 0) of the first optical element 104, three Euler angles of the first optical element 104, coordinate values of the first optoelectronic chip 105, and three Euler angles of the first optoelectronic chip 105.

For example, the three Euler angles of the first optical element 104 are sequentially (0°, 0°, 0°), the coordinate values of the first optoelectronic chip 105 are (10, 5, 3), and the three Euler angles of the first optoelectronic chip 105 are sequentially (10°, -10°, 0°). In this case, a relative position between the first optical element 104 and the first optoelectronic chip 105 is (10, 5, 3), and a relative attitude between the first optical element 104 and the first optoelectronic chip 105 is (10°, -10°, 0°). The relative pose between the first optical element 104 and the first optoelectronic chip 105 may be represented by the relative position (10, 5, 3) and the relative attitude (10°, -10°, 0°).

Optionally, a unit of the three coordinate axes in the optical product coordinate system may be micrometer (µm), millimeter (mm), centimeter (cm), or meter (m). This is not limited in this application.

In the same manner, a relative pose between the second optical element 106 and the second optoelectronic chip 107 may be determined, and a relative pose between the following first lens module and second lens module may be further determined.

It should be noted that the foregoing method for determining the relative pose is an example, and constitutes no limitation on this application.

It can be learned from the foregoing that accuracy of coupling the optical products affects definition of an image in the imaging unit. Therefore, definition of images generated by the imaging unit when the optical products are in different relative poses may be measured, and a relative pose between the optical products may be adjusted based on data such as the definition of the images, to implement coupling between the optical products. In view of this, this application provides an image definition measurement manner.

Refer to FIG. 8A. FIG. 8A is a diagram of measuring image definition according to an embodiment of this application, to measure definition (also referred to as a resolution) of an image generated by an imaging unit when optical products are in different relative poses.

As shown in FIG. 8A, FIG. 8A includes an imaging unit, an optical element, and an optoelectronic chip. The imaging unit is, for example, the imaging unit 101, the imaging unit 201, or the imaging unit 301, the optical element is, for example, the first optical element 104 or the second optical element 106, and the optoelectronic chip is, for example, the first optoelectronic chip 105 or the second optoelectronic chip 107.

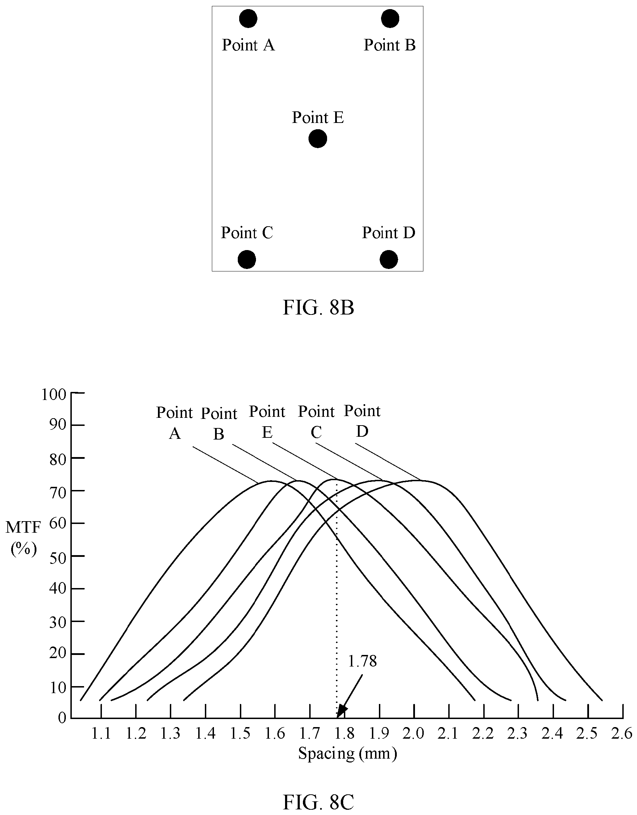

Refer to FIG. 8B. FIG. 8B is a diagram of an image of a light spot on an optoelectronic chip according to an embodiment of this application. The image of the light spot shown in FIG. 8B is, for example, an imaging that is of a pattern on the optoelectronic chip shown in FIG. 8A and that is formed in the imaging unit. To obtain definition of images generated by the imaging unit when the optical products are in different relative poses, one or more points may be preset on the image generated by the imaging unit as sampling points for the definition. As shown in FIG. 8B, a point A, a point B, a point C, a point D, and a point E are preset as sampling points for definition of the image of the light spot on the optoelectronic chip. The point E is a center point of the image of the light spot on the electronic chip, and the point A, the point B, the point C, and the point D are points at edges of the image of the light spot.

When the optical products are in different relative poses, the imaging unit may generate images with a same pattern and different definition, or may generate images with different patterns and same definition, or the like. For ease of measurement, it should be ensured that patterns generated by the imaging unit when the optical products are in different relative poses are the same. For example, in a direction of an optical axis of the imaging unit, a spacing between the optical element and the optoelectronic chip is adjusted, to ensure that the patterns generated by the imaging unit are the same.

In a possible implementation, a distance between the optoelectronic chip and the optical element is adjusted in the direction of the optical axis of the imaging unit, and the imaging unit is enabled to generate images corresponding to different spacings. Further, definition at the point A, the point B, the point C, the point D, and the point E of each image is separately obtained, to generate a curve chart in which definition at each point changes with the distance between the optoelectronic chip and the optical element (which is also referred to as a through-focus curve corresponding to each point). Optimal definition of the image and a spacing between the optoelectronic chip and the optical element when the image has the optimal definition may be obtained based on the through-focus curve chart. How to represent the definition is not limited in this application. For example, the definition of the image may be represented by using an SFR value or an MTF value.

For example, as shown in FIG. 8A, in the direction of the optical axis of the imaging unit, a position of the optoelectronic chip is separately adjusted to a position A, a position B (a focal plane of the optical element), ..., and a position N, where N is an integer greater than 2. The imaging unit respectively generates images of a light spot on the optoelectronic chip when the optoelectronic chip is at the position A, the position B, ..., and the position N, and further generates through-focus curves of a plurality of points based on preset sampling points (for example, the point A, the point B, the point C, the point D, and the point E shown in FIG. 8B).

Optionally, the distance between the optoelectronic chip and the optical element may be adjusted in the direction of the optical axis of the imaging unit in the following manners.

Manner 1: Adjust a position of the optoelectronic chip in the direction of the optical axis of the imaging unit.

Manner 2: Adjust a position of the optical element in the direction of the optical axis of the imaging unit.

Manner 3: Adjust positions of the optical element and the optoelectronic chip in the direction of the optical axis of the imaging unit.

How to adjust the spacing between the optoelectronic chip and the optical element in the direction of the optical axis of the imaging unit is not limited in this application.

Refer to FIG. 8C. FIG. 8C is a diagram of a through-focus curve according to an embodiment of this application. As shown in FIG. 8C, a horizontal axis represents a spacing between an optical element and an optoelectronic chip, and a vertical axis represents definition (MTF). FIG. 8C shows through-focus curves corresponding to the point A, the point B, the point C, the point D, and the point E. As shown in FIG. 8C, MTF values of optimal imaging definition of the point A, the point B, the point C, the point D, and the point E in the imaging unit are all 70% (in an actual implementation, optimal imaging definition of a plurality of points may be different). When the spacing between the optical element and the optoelectronic chip is 1.78 mm, the through-focus curve corresponding to the point E indicates that imaging of the point E in the imaging unit has optimal definition. Because the point E is the center point of the image of the light spot on the optoelectronic chip, the spacing between the optical element and the optoelectronic chip when the point E has the optimal definition may be used as a focal length of the optical element, to obtain the focal plane of the optical element through calculation.

It should be noted that, in a implementation process, another method may be alternatively used to obtain the imaging definition of the imaging unit. This is not limited in implementations of this application.

The following sequentially describes the imaging unit, the control unit, the adjustment unit, and the illumination unit provided in this application.

### 1. Imaging unit

The imaging unit is, for example, the imaging unit 101, the imaging unit 201, or the imaging unit 301 in the foregoing content. The imaging unit includes an imaging optical element and an image sensor. The imaging optical element is configured to obtain a light beam reflected by a pattern on an optoelectronic chip (for example, the first optoelectronic chip 105, the second optoelectronic chip 107, the third optoelectronic chip, or the fourth optoelectronic chip), and the image transmitter is configured to generate an image based on the light beam obtained by the imaging optical element.

In a possible implementation, an angular resolution of the imaging optical element is greater than or equal to X times an angular resolution of a to-be-coupled optical element, where X is an integer greater than or equal to 5.

The to-be-coupled optical element is, for example, the first optical element 104, the second optical element 106, the third optical element, or the fourth optical element.

For example, X=10, and the angular resolution of the imaging optical element is greater than or equal to 10 times the angular resolution of the to-be-coupled optical element. For example, the angular resolution of the to-be-coupled optical element is 8 pixels per degree (pixels per degree, PPD), and the angular resolution of the imaging optical element needs to be at least 80 PPD.

Optionally, a focal length of the imaging optical element is greater than or equal to 80 mm. For example, the focal length of the imaging optical element is 80 mm, 200 mm, 300 mm, or 500 mm.

Optionally, the imaging optical element is, for example, a long-focus lens or a collimator. A focal length of the long-focus lens is greater than or equal to 80 mm, for example, is 100 mm, 300 mm, or 500 mm. A focal length of the collimator is greater than or equal to 200 mm, for example, is 200 mm, 300 mm, 600 mm, or 800 mm.

Optionally, the focal length of the imaging optical element is related to an attribute of a to-be-coupled optical product.

For example, the focal length of the imaging optical element is related to a size of a pixel on an optoelectronic chip in the to-be-coupled optical product. When the pixel on the optoelectronic chip occupies a large area, an imaging optical element with a short focal length may be used. When the pixel on the optoelectronic chip occupies a small area, an imaging optical element with a long focal length may be used. In this way, an image of a light spot on the optoelectronic chip in an image generated by the imaging unit has a moderate size, and is easy to resolute. This avoids a problem that resolution is inaccurate or is difficult because an image that is of the pixel on the optoelectronic chip and that is formed in the imaging unit is excessively small or excessively large.

In a possible implementation, the imaging unit is a high-resolution detector.

For example, a resolution of the imaging unit is greater than or equal to 1080 pixels per inch (pixels per inch, PPI). For example, the resolution of the imaging unit is 1080 PPI, 2056 PPI, 4080 PPI, or the like. The imaging unit is a high-resolution detector, so that an image generated by the imaging unit can be clearer. This facilitates resolution and processing performed by a control unit on the image, thereby generating an accurate control instruction, and improving assembly accuracy (coupling accuracy).

Optionally, the imaging unit further has a low-illumination detection capability.

For example, minimum luminance that can be collected by the imaging unit is 1 light intensity (illumination/illuminance, Lux). For example, the minimum luminance collected by the imaging unit is 10 Lux, 25 Lux, or the like. The imaging unit has the low-illumination detection capability, so that the imaging unit can generate an image of the light spot on the optoelectronic chip at low light intensity, thereby avoiding a case in which the image of the light spot on the optoelectronic chip cannot be generated, and expanding an application scenario of a coupling platform.

### 2. Control unit

For example, the control unit is the control unit 102, the control unit 202, or the control unit 302. The control unit is configured to process an image generated by an imaging unit, and generate, based on a processing result, a control instruction for controlling an adjustment unit. For example, one or more of the following forms are included.

**Form 1:** The control unit sends the control instruction to the adjustment unit, so that the adjustment unit adjusts a spacing between an optical element and an optoelectronic chip in optical products in an axial direction of the imaging unit. The control unit then obtains a through-focus curve of the optical element based on a plurality of images generated by the imaging unit. For a implementation, refer to the related descriptions in FIG. 8A to FIG. 8C. Details are not described herein again.

**Form 2:** A distance between an optoelectronic chip and the imaging unit is controlled based on a size of an image of a light spot on the optoelectronic chip.

For example, when an image that is of a pattern on the optoelectronic chip and that is formed in the imaging unit is excessively small, the distance between the optoelectronic chip and the imaging unit may be controlled to be reduced. For another example, when an image that is of the optoelectronic chip and that is formed in the imaging unit is excessively large, the distance between the optoelectronic chip and the imaging unit may be controlled to be increased. In this manner, the size of the image of the light spot on the optoelectronic chip is moderate, facilitating subsequent resolution and processing.

**Form 3:** Based on definition of an image of a light spot on an optoelectronic chip, a relative pose between the optoelectronic chip and the imaging unit is controlled, so that the definition of the image of the light spot on the optoelectronic chip is optimal definition.

With reference to FIG. 8C, the spacing between the optoelectronic chip and the optical element in the direction of the optical axis is first adjusted, so that an image corresponding to the point E has optimal definition. Then, one or more of a pitch angle, a roll angle, and a yaw angle are adjusted, so that images corresponding to the point A, the point B, the point C, and the point D also have optimal definition, thereby achieving coupling between the optoelectronic chip and the optical element.

**Form 4:** Based on sizes of images of light spots on optoelectronic chips in two lens modules and positions of the images in the imaging unit, a relative pose between the two lens modules is controlled, so that the sizes of the images of the light spots on the optoelectronic chips in the two lens modules and the positions of the images in the imaging unit are the same, thereby achieving coupling between the two lens modules.

It should be noted that the two lens modules may be the first lens module 501 and the second lens module 502, or the two lens modules may be a lens module obtained by coupling the first optical element 104 to the first optoelectronic chip 105 and a lens module obtained by coupling the second optical element 106 to the second optoelectronic chip 107.

In a possible implementation, the control unit may be implemented in a form in which a processor invokes software. For example, an apparatus includes a processor, the processor is connected to a memory, the memory stores instructions, and the processor invokes the instructions stored in the memory, to implement any one of the foregoing control forms or functions of units in the apparatus. The processor is, for example, a general-purpose processor like a central processing unit (central processing unit, CPU) or a microprocessor, and the memory is a memory inside the apparatus or a memory outside the apparatus. Alternatively, a unit in the apparatus may be implemented in a form of a hardware circuit, and the hardware circuit may be designed to implement functions of some or all units. The hardware circuit may be understood as one or more processors. For example, the hardware circuit is an application-specific integrated circuit (application-specific integrated circuit, ASIC), a programmable logic device (programmable logic device, PLD), or a field programmable gate array (field programmable gate array, FPGA).

### 3. Adjustment unit

The adjustment unit is, for example, the adjustment unit 103, the adjustment unit 203, or the adjustment unit 303 in the foregoing embodiments. The adjustment unit is configured to adjust a relative pose between to-be-coupled optical products, to complete coupling between the to-be-coupled optical products.

In a possible implementation, the adjustment unit includes a three-dimensional adjustment frame and/or a six-dimensional adjustment frame. The three-dimensional adjustment frame can implement adjustment of an object in three dimensions, and the six-dimensional adjustment frame can implement adjustment of an object in six dimensions. With reference to FIG. 7, the three-dimensional adjustment frame can adjust values of an object in any three dimensions of an x-axis, a y-axis, a z-axis, a pitch angle, a roll angle, and a yaw angle. For example, the three-dimensional adjustment frame can adjust values of the object in terms of the x-axis, the y-axis, and the z-axis. For another example, the three-dimensional adjustment frame can adjust values of the object in terms of the pitch angle, the roll angle, and the yaw angle. The six-dimensional adjustment frame can adjust values of the object in terms of the x-axis, the y-axis, the z-axis, the pitch angle, the roll angle, and the yaw angle.

For example, the to-be-coupled products are the first optical element 104 and the first optoelectronic chip 105, and the adjustment unit may have the following several combinations.

**Combination 1:** The adjustment unit is a six-dimensional adjustment frame, and the adjustment unit adjusts a relative pose between the first optical element 104 and the first optoelectronic chip 105 by adjusting poses of the first optical element 104 and the first optoelectronic chip 105.

**Combination 2:** The adjustment unit is two six-dimensional adjustment frames, and the adjustment unit adjusts a relative pose between the first optical element 104 and the first optoelectronic chip 105 by respectively adjusting poses of the first optical element 104 and the first optoelectronic chip 105 by using the two six-dimensional adjustment frames.

**Combination 3:** The adjustment unit is two three-dimensional adjustment frames, and the adjustment unit adjusts a relative pose between the first optical element 104 and the first optoelectronic chip 105 by respectively adjusting poses of the first optical element 104 and the first optoelectronic chip 105 by using the two three-dimensional adjustment frames.

Optionally, when the to-be-coupled products are the second optical element 106 and the second optoelectronic chip 107, or the to-be-coupled products are the first lens module 501 and the second lens module 502, for a implementation of the adjustment unit, refer to the foregoing corresponding content. Details are not described herein again.

Optionally, when the to-be-coupled products include the first optical element 104 and the first optoelectronic chip 105, and the second optical element 106 and the second optoelectronic chip 107, the adjustment unit may be two six-dimensional adjustment frames, three six-dimensional adjustment frames, four six-dimensional adjustment frames, four three-dimensional adjustment frames, or the like. For example, when the adjustment unit is two six-dimensional adjustment frames, the two six-dimensional adjustment frames are respectively configured to adjust poses of the first optical element 104 and the second optical element 106, or the two six-dimensional adjustment frames are respectively configured to adjust poses of the first optical element 104 and the second optoelectronic chip 107, or the two six-dimensional adjustment frames are respectively configured to adjust poses of the first optoelectronic chip 105 and the second optical element 106, or the two six-dimensional adjustment frames are respectively configured to adjust poses of the first optoelectronic chip 105 and the second optoelectronic chip 107. For a implementation of how the adjustment unit performs adjustment when the adjustment unit is another combination, refer to the foregoing related descriptions. Details are not described one by one herein.

In a possible implementation, the adjustment unit is configured to adjust spatial positions of the to-be-coupled optical products.

For example, the to-be-coupled products are the first optical element 104 and the first optoelectronic chip 105. The adjustment unit is configured to adjust a spatial position of the first optical element 104 and/or a spatial position of the first optoelectronic chip 105. For example, the adjustment unit is a six-dimensional adjustment frame, configured to adjust the spatial position of the first optical element 104 and/or the spatial position of the first optoelectronic chip 105. For another example, the adjustment unit is two six-dimensional adjustment frames, configured to respectively adjust the spatial positions of the first optical element 104 and the first optoelectronic chip 105. For another example, the adjustment unit is two three-dimensional adjustment frames, configured to respectively adjust the spatial positions of the first optical element 104 and the first optoelectronic chip 105.

For example, the to-be-coupled products are the second optical element 106 and the second optoelectronic chip 107. The adjustment unit is configured to adjust a spatial position of the second optical element 106 and/or a spatial position of the second optoelectronic chip 107. For a implementation, refer to the related descriptions of the to-be-coupled products being the first optical element 104 and the first optoelectronic chip 105. Details are not described herein again.

For example, the to-be-coupled products are the first lens module 501 and the second lens module 502. The adjustment unit is configured to adjust a spatial position of the first lens module 501 and/or a spatial position of the second lens module 502. For a implementation, refer to the related descriptions of the to-be-coupled products being the first optical element 104 and the first optoelectronic chip 105. Details are not described herein again.

### 4. Illumination unit

The illumination unit is, for example, the illumination unit 108, the illumination unit 109, the illumination unit 401, the illumination unit 402, or the illumination unit 601. The illumination unit is configured to provide an illumination light beam for an optoelectronic chip, so that an imaging unit can clearly acquire an illuminated pattern on the optoelectronic chip. This facilitates accurate control of a control unit, and helps reduce coupling time consumption.

In a possible implementation, the illumination unit includes any one or more of the following: an optical fiber, an optical lens, an optical fiber, frosted glass, or a reflector.

The optical fiber and the frosted glass may form a flood light source, and then a light beam generated by the formed flood light source can illuminate the optoelectronic chip through the reflector. Due to a small size, the optical fiber may directly transmit a light beam to the optoelectronic chip and illuminate the optoelectronic chip.

Optionally, the illumination unit 108, the illumination unit 401, and the illumination unit 601 include, for example, an optical fiber, frosted glass, and a reflector, and are configured to provide a flood light source. This manner has simple operations and low production costs, and helps reduce costs of a coupling platform.

Optionally, the illumination unit 108, the illumination unit 401, and the illumination unit 601 include, for example, an optical fiber, an optical lens, and a reflector, and are configured to provide a directed light source. The light source provided in this manner is a directed light source, so that intensity of light received by the optoelectronic chip can be increased, and a case in which intensity of light reflected by the optoelectronic chip and received by the imaging unit is low because an aperture of an optical element is excessively small or a reflection capability of the optoelectronic chip is weak is avoided, thereby ensuring that the imaging unit can perform clear imaging on an illuminated pattern on the optoelectronic chip.

Optionally, the illumination unit 109 and the illumination unit 402 include, for example, optical fibers.

In a possible implementation, an appropriate light source may be selected based on attributes of to-be-coupled optical products. One or more of the following cases are included.

**Case 1: An appropriate light source may be selected based on an aperture of an optical element in the to-be-coupled optical products.**

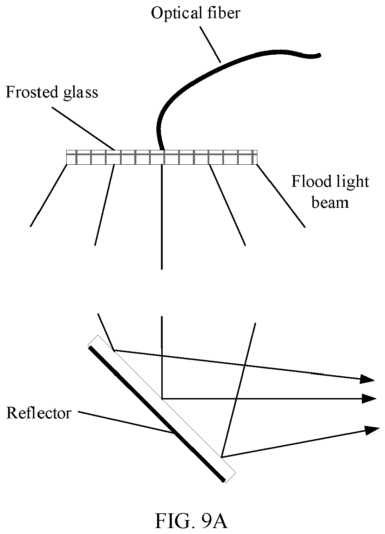

For example, when the aperture of the optical element is large, a flood light source may be selected for illumination. For example, a flood light source is generated by using an illumination unit including an optical fiber, frosted glass, and a reflector, and provides an illumination light beam for the optoelectronic chip. Refer to FIG. 9A. FIG. 9A is a diagram of an illumination unit according to an embodiment of this application. As shown in FIG. 9A, FIG. 9A includes an optical fiber, frosted glass, and a reflector. The optical fiber and the frosted glass form a flood light source. A flood light beam provided by the flood light source is reflected by the reflector, to illuminate the optoelectronic chip.

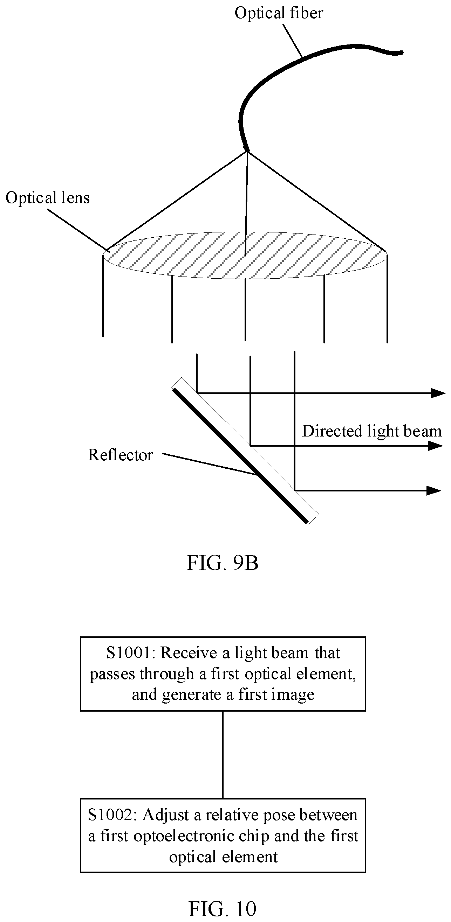

For example, when the aperture of the optical element is small, a directed light source may be selected for illumination. For example, a directed light source is generated by using an illumination unit including an optical fiber, an optical lens, and a reflector, and provides an illumination light beam for the optoelectronic chip. Refer to FIG. 9B. FIG. 9B is a diagram of another illumination unit according to an embodiment of this application. As shown in FIG. 9B, FIG. 9B includes an optical fiber, an optical lens, and a reflector. The optical fiber and the optical lens form a directed light source. A directed light beam provided by the directed light source is reflected by the reflector, to illuminate the optoelectronic chip.

**Case 2: An appropriate light source may be selected based on a reflection capability of the optoelectronic chip in the to-be-coupled optical products.**

For example, when the optoelectronic chip has a strong reflection capability, a flood light source may be selected for illumination. For example, a flood light source is generated by using an illumination unit including an optical fiber, frosted glass, and a reflector, and provides an illumination light beam for the optoelectronic chip. For a implementation, refer to the related descriptions in FIG. 9A.

For example, when the optoelectronic chip has a weak reflection capability, a directed light source may be selected for illumination. For example, a directed light source is generated by using an illumination unit including an optical fiber, an optical lens, and a reflector, and provides an illumination light beam for the optoelectronic chip. For a implementation, refer to the related descriptions in FIG. 9B.

In this implementation of this application, light intensity of the optical fiber or the optical fiber in the illumination unit is not limited, provided that intensity of the light beam provided by the illumination unit enables a light beam reflected by the optoelectronic chip to satisfy a requirement for clear imaging by the imaging unit.

In the foregoing described content, the optical element (for example, the first optical element 104, the second optical element 106, the third optical element, or the fourth optical element) or the optoelectronic chip (for example, the first optoelectronic chip 105, the second optoelectronic chip 107, the third optoelectronic chip, or the fourth optoelectronic chip) included in the to-be-coupled optical products exists independently. In some scenarios, two optical elements or two optoelectronic chips may be rigidly connected. For example, the first optical element 104 is rigidly connected to the second optical element 106. For another example, the first optoelectronic chip 105 is rigidly connected to the second optoelectronic chip 107.

It may be understood that when a plurality of sets of optical products are coupled (for example, the coupling platform 200 can simultaneously couple the first optical element 104 to the first optoelectronic chip 105 and couple the second optical element 106 to the second optoelectronic chip 107), the to-be-coupled optical element and/or optoelectronic chip are/is rigidly connected, so that the adjustment unit can simultaneously adjust poses of a plurality of optical elements (for example, the first optical element 104 and the second optical element 106) and/or a plurality of optoelectronic chips (for example, the first optoelectronic chip 105 and the second optoelectronic chip 107). In this way, cycle time of an assembly process of the optical products can be shortened, and assembly efficiency and units per hour of the optical products can be improved. For a implementation, refer to descriptions in subsequent related embodiments. Details are not described herein.

In some other scenarios, a plurality of optical elements or a plurality of optoelectronic chips may be rigidly connected. Examples are not provided one by one in this application. For a coupling scenario in which a plurality of optical elements and/or a plurality of optoelectronic chips are connected, refer to a coupling scenario in which two optical elements and/or two optoelectronic chips are connected.

The foregoing content separately describes the coupling platform 100, the coupling platform 200, and the coupling platform 300. The following provides descriptions of applying a coupling method provided in this application to the foregoing coupling platform, to implement coupling between to-be-coupled optical products.

Refer to FIG. 10. FIG. 10 is a diagram of a coupling method according to an embodiment of this application. The coupling method is used to couple a first optical element to a first optoelectronic chip, and the first optoelectronic chip is placed under an illumination condition. As shown in FIG. 10, the coupling method in FIG. 10 includes step S1001 and step S1002, and is applied to the coupling platform 100 or the coupling platform 200. Details are as follows:
**Step S1001: A coupling platform receives a light beam that passes through the first optical element, and generates a first image.**

The coupling platform is, for example, the coupling platform 100 or the coupling platform 200. For descriptions of the coupling platform 100, refer to the related descriptions in FIG. 1 or FIG. 2. Details are not described herein again. For descriptions of the coupling platform 200, refer to the related descriptions in FIG. 3 or FIG. 4. Details are not described herein again.

In a possible implementation, an imaging unit in the coupling platform receives the light beam that passes through the first optical element, and generates the first image.

For example, the imaging unit 101 in the coupling platform 100 receives the light beam that passes through the first optical element, and generates the first image. The light beam received by the imaging unit 101 includes a light beam reflected by an illuminated pattern on the first optoelectronic chip, and the first image includes an image A. For related descriptions of the imaging unit 101, refer to the foregoing corresponding content. Details are not described herein again. The first optical element is, for example, the first optical element 104 shown in FIG. 1 or FIG. 2, and the first optoelectronic chip is, for example, the first optoelectronic chip 105 shown in FIG. 1 or FIG. 2. For descriptions of the first optical element 104 and the first optoelectronic chip 105, refer to the related descriptions in FIG. 1 or FIG. 2. Details are not described herein again.

For example, the imaging unit 201 in the coupling platform 200 receives the light beam that passes through the first optical element, and generates the first image. The light beam received by the imaging unit 201 includes a light beam reflected by an illuminated pattern on the first optoelectronic chip, and the first image includes an image of a light spot on the first optoelectronic chip. For related descriptions of the imaging unit 201, refer to the foregoing corresponding content. Details are not described herein again. The first optical element is, for example, the first optical element 104 shown in FIG. 3 or FIG. 4, and the first optoelectronic chip is, for example, the first optoelectronic chip 105 shown in FIG. 3 or FIG. 4. For descriptions of the first optical element 104 and the first optoelectronic chip 105, refer to the related descriptions in FIG. 3 or FIG. 4. Details are not described herein again.

It should be noted that the coupling platform 200 is configured to simultaneously couple two sets of optical products. For example, the coupling platform 200 is configured to simultaneously couple the first optical element 104 and the first optoelectronic chip 105, and the second optical element 106 and the second optoelectronic chip 107. However, in some scenarios, the coupling platform 200 may alternatively couple one set of optical products. For example, the coupling platform 200 is configured to couple the first optical element 104 to the first optoelectronic chip 105, or the coupling platform 200 is configured to couple the second optical element 106 to the second optoelectronic chip 107.

**Step S1002: The coupling platform adjusts a relative pose between the first optoelectronic chip and the first optical element.**

In a possible implementation, a control unit in the coupling platform controls an adjustment unit in the coupling platform based on the first image, and the adjustment unit adjusts the relative pose between the first optoelectronic chip and the first optical element based on a control instruction of the control unit.

The control unit is, for example, the control unit 102 or the control unit 202. When the control unit is the control unit 102, the adjustment unit is the adjustment unit 103. When the control unit is the control unit 202, the adjustment unit is the adjustment unit 203. For descriptions of the control unit 102, the control unit 202, the adjustment unit 103, or the adjustment unit 203, refer to the descriptions corresponding to FIG. 1 to FIG. 4. Details are not described herein again.

Optionally, the control unit can obtain a through-focus curve of the first optical element based on the first image. For a implementation process, refer to the related descriptions in FIG. 8A to FIG. 8C. Details are not described herein again. Obtaining the through-focus curve of the first optical element may be obtaining through-focus curves of a plurality of points, for example, through-focus curves corresponding to a point A, a point B, a point C, a point D, and a point E. It should be noted that the through-focus curve is a curve chart representing a relationship between imaging definition and a distance between an object and a focal plane. In a implementation process, the relationship between the imaging definition and the distance between the object and the focal plane may be alternatively represented in another manner such as a table, a matrix, or a database. Further, a storage form and a representation form of the through-focus curve in the control unit are not limited in this application. That a focal plane of the first optical element can be obtained based on the first image falls within the protection scope of this application.

After obtaining the through-focus curve and obtaining the focal plane of the first optical element through calculation, the control unit may control the adjustment unit, so that the adjustment unit adjusts the relative pose between the first optoelectronic chip and the first optical element, to make the first optoelectronic chip located on the focal plane of the first optical element, thereby achieving coupling between the first optoelectronic chip and the first optical element. With reference to FIG. 8B, the focal plane of the first optical element may be a plane determined based on optimal definition of the point A, the point B, the point C, the point D, or the point E. For example, if a spacing corresponding to the optimal definition of the point E is 1.78 mm, a distance between a focus determined based on the optimal definition of the point E and the first optical element is 1.78 mm, and the focal plane of the first optical element is a plane including the focus.

With reference to FIG. 7, the following shows examples of several possible adjustment manners.

It should be noted that control instructions performed by the adjustment unit below are all sent by the control unit. For smoothness and brevity of language, the adjustment unit is a main body performing an adjustment action in the following, and related descriptions of sending a control instruction by the control unit are not shown. Therefore, it should not be understood that the control unit does not send any control instruction or does not perform any action in an adjustment process.

**Adjustment manner 1:** The adjustment unit adjusts an axial spacing (in a z-axis direction) between the first optical element and the first optoelectronic chip, so that a position on the first optoelectronic chip is located on the focal plane of the first optical element.

Based on the content shown in FIG. 8A to FIG. 8C, the focal plane of the first optical element may be obtained. The axial spacing between the first optical element and the first optoelectronic chip is adjusted, so that a position on the first optoelectronic chip can be located on the focal plane of the first optical element. With reference to FIG. 8B, the axial spacing between the first optical element and the first optoelectronic chip is adjusted, so that the point E on the first optoelectronic chip can be located on the focal plane of the first optical element, that is, the spacing between the optical element and the optoelectronic chip is 1.78 mm.

It should be noted that adjusting the axial spacing between the first optical element and the first optoelectronic chip may be implemented by adjusting a position of the first optical element in an x-axis direction, or may be implemented by adjusting a position of the first optoelectronic chip in an x-axis direction, or may be implemented by jointly adjusting positions of the first optical element and the first optoelectronic chip in an x-axis direction.

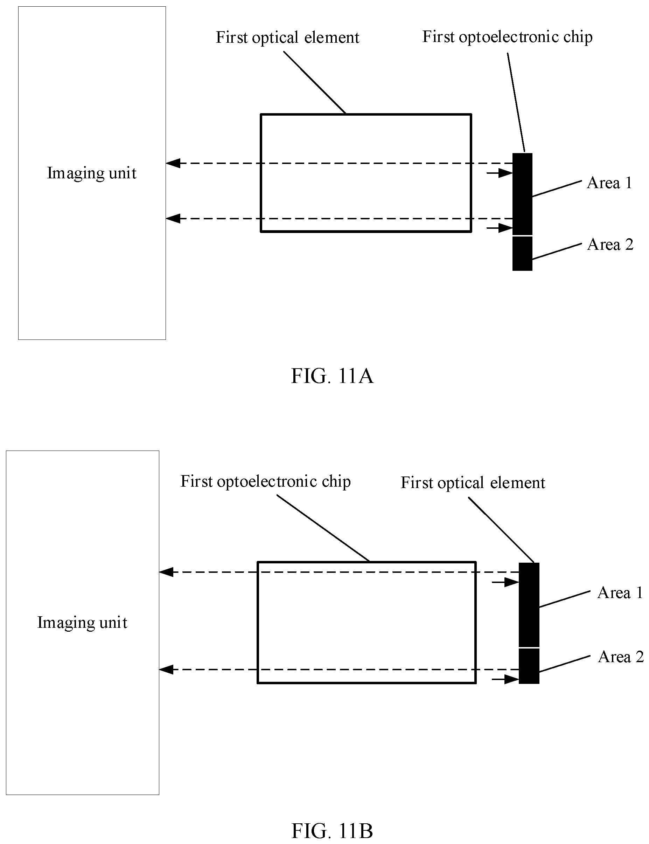

**Adjustment manner 2:** The adjustment unit may alternatively adjust up-down and left-right relative positions between the first optical element and the first optoelectronic chip, so that the imaging unit can generate a complete light spot image of the first optoelectronic chip. Refer to FIG. 11A. FIG. 11A is a diagram of a coupling process according to an embodiment of this application, to show a case in which the imaging unit cannot generate a complete light spot on the first optoelectronic chip.

As shown in FIG. 11A, the first optical element and the first optoelectronic chip do not completely overlap. For example, the first optical element and the first optoelectronic chip do not completely overlap in a y-axis direction, and/or the first optical element and the first optoelectronic chip do not completely overlap in a z-axis direction. In the first optoelectronic chip, an area that overlaps the first optical element is referred to as an area 1. In the first optoelectronic chip, an area that does not overlap the first optical element is referred to as an area 2. It can be seen from FIG. 11A that a light beam reflected by the area 1 may pass through the first optical element and be received by the imaging unit. Because the area 2 does not overlap the first optical element, a light beam reflected by the area 2 cannot pass through the first optical element and be received by the imaging unit. Therefore, the first image generated by the imaging unit may not include all images of a pattern on the first optoelectronic chip. The up-down and left-right relative positions between the first optical element and the first optoelectronic chip are adjusted, so that the first image includes all the images of the pattern on the first optoelectronic chip. It should be noted that the area 2 shown in FIG. 11A may not be illuminated because the area 2 does not overlap the first optical element. Consequently, the area 2 does not reflect a light beam, and the first image does not include all the images of the pattern on the first optoelectronic chip.

Refer to FIG. 11B. FIG. 11B is a diagram of another coupling process according to an embodiment of this application, to show a case in which the first optical element and the first optoelectronic chip completely overlap in an up-down direction (z-axis direction) and/or a left-right direction (y-axis direction).

As shown in FIG. 11B, the first optical element and the first optoelectronic chip shown in FIG. 11B completely overlap, so that a light beam reflected by the area 2 on the first optoelectronic chip can be received by the imaging unit, or the area 2 on the first optoelectronic chip can be illuminated, so that a light beam reflected by the area 2 can also be received by the imaging unit.

It should be noted that adjusting the up-down and left-right relative positions between the first optical element and the first optoelectronic chip may be implemented by adjusting a position of the first optical element in the y-axis direction and/or the z-axis direction, or may be implemented by adjusting a position of the first optoelectronic chip in the y-axis direction and/or the z-axis direction, or may be implemented by jointly adjusting positions of the first optical element and the first optoelectronic chip in the y-axis direction and/or the z-axis direction.

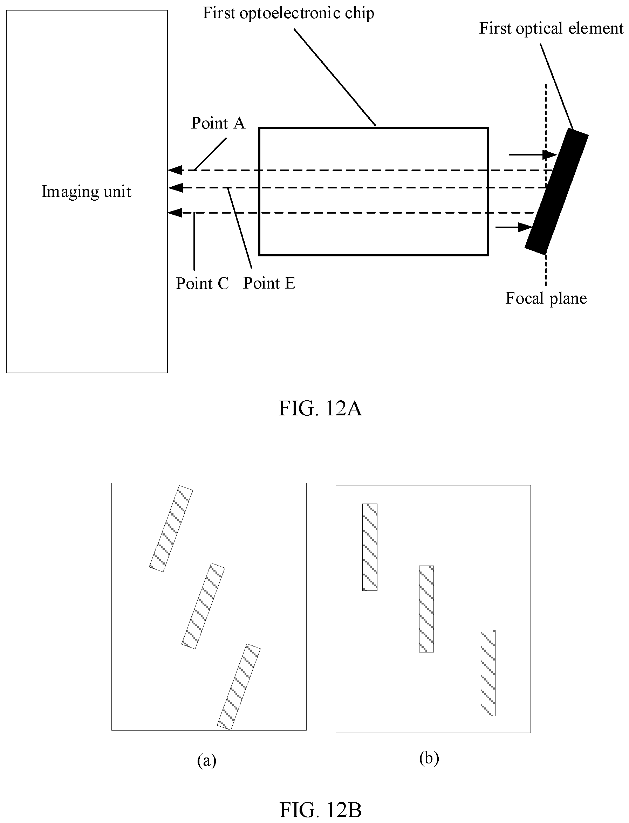

**Adjustment manner 3:** The adjustment unit may alternatively adjust Euler angles of the first optical element and the first optoelectronic chip, so that the first optoelectronic chip is located on the focal plane of the first optical element. Refer to FIG. 12A. FIG. 12A is a diagram of another coupling process according to an embodiment of this application, to show a case in which the Euler angle of the first optical element is inconsistent with that of the first optoelectronic chip.

As shown in FIG. 12A, the Euler angle of the first optical element is inconsistent with that of the first optoelectronic chip. For example, if the first optical element and the first optoelectronic chip are inconsistent in terms of one or more of a roll angle or a yaw angle, imaging definition of the pattern on the first optoelectronic chip in the imaging unit is inconsistent. As shown in FIG. 12A, light beams reflected by a point A, a point C, and a point E on the optoelectronic chip are shown. The point A and the point C are not located on the focal plane of the first optical element, and the point E is located on the focal plane of the first optical element. Therefore, imaging definition corresponding to the point A and the point C in the imaging unit is lower than imaging definition corresponding to the point E in the imaging unit. The Euler angles of the first optical element and the first optoelectronic chip are adjusted, to make the first optoelectronic chip located on the focal plane of the first optical element, so that an image that is of the pattern on the first optoelectronic chip and that is formed in the imaging unit has optimal definition, and imaging definition of positions on the first optoelectronic chip in the imaging unit is consistent.

For another example, an angle at which the pattern on the first optoelectronic chip is imaged in the imaging unit may be adjusted by adjusting a pitch angle of the first optoelectronic chip (rotating around the optical axis).

Refer to FIG. 12B. FIG. 12B is a diagram of imaging according to an embodiment of this application, to show imaging of an illuminated pattern on the first optoelectronic chip in the imaging unit.

As shown in FIG. 12B, (a) in FIG. 12B is imaging of the pattern on the first optoelectronic chip in the imaging unit before the pitch angle of the first optoelectronic chip is adjusted. (b) in FIG. 12B is imaging of the pattern on the first optoelectronic chip in the imaging unit after the pitch angle of the first optoelectronic chip is adjusted. It may be understood that an angle of the image A may be adjusted by adjusting the pitch angle of the first optoelectronic chip.

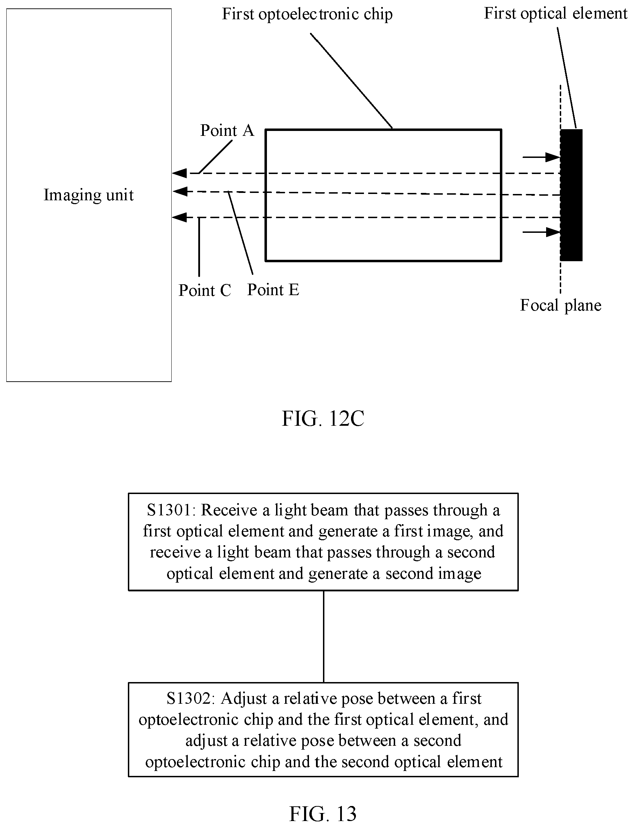

Refer to FIG. 12C. FIG. 12C is a diagram of another coupling process according to an embodiment of this application, to show a case in which the Euler angle of the first optical element is consistent with that of the first optoelectronic chip.

As shown in FIG. 12C, the Euler angles of the first optical element and the first optoelectronic chip shown in FIG. 12C are consistent, and the first optoelectronic chip is located on the focal plane of the first optical element, so that an image of a light spot on the first optoelectronic chip has optimal definition, and imaging definition of positions (a point A, a point C, and a point E) on the first optoelectronic chip in the imaging unit is consistent. In addition, the image of the light spot on the first optoelectronic chip may be further made the same as a preset image.

It should be noted that adjusting the Euler angles of the first optical element and the first optoelectronic chip may be implemented by adjusting the Euler angle of the first optical element, or may be implemented by adjusting the Euler angle of the first optoelectronic chip, or may be implemented by jointly adjusting the Euler angles of the first optical element and the first optoelectronic chip.

Optionally, in a adjustment process, an execution sequence of the foregoing three adjustment manners is not limited.

For example, the adjustment manner 1 may be first performed, so that a position on the first optoelectronic chip is located on the focal plane of the first optical element. Then, the adjustment manner 2 is performed, so that a complete light spot of the first optoelectronic chip can be generated on the imaging unit. Finally, the adjustment manner 3 is performed, so that the first optoelectronic chip is completely located on the focal plane of the first optical element, to complete coupling.

For another example, the adjustment manner 2 may be first performed, so that a complete light spot of the first optoelectronic chip can be generated on the imaging unit. Then, the adjustment manner 1 is performed, so that a position on the first optoelectronic chip is located on the focal plane of the first optical element. Finally, the adjustment manner 3 is performed, so that the first optoelectronic chip is completely located on the focal plane of the first optical element, to complete coupling.

For another example, the adjustment manner 3 may be first performed, so that the optical axis of the first optoelectronic chip is perpendicular to the optical axis of the first optical element. Then, the adjustment manner 2 is performed, so that a complete light spot of the first optoelectronic chip can be generated on the imaging unit. Finally, the adjustment manner 1 is performed, so that the first optoelectronic chip is completely located on the focal plane of the first optical element, to complete coupling.

Optionally, in a adjustment process, the foregoing three adjustment manners may be sequentially used for adjustment, or a plurality of adjustment manners may be simultaneously used for adjustment.

For example, the adjustment manner 1 and the adjustment manner 2 may be performed simultaneously, or the adjustment manner 2 and the adjustment manner 3 may be performed simultaneously, or the adjustment manner 1 and the adjustment manner 3 may be performed simultaneously, or the adjustment manner 1, the adjustment manner 2, and the adjustment manner 3 may be performed simultaneously.

The foregoing describes, by using an example, how to couple one set of optical products (for example, the first optical element 104 and the first optoelectronic chip 105). The following describes, by using an example, how to simultaneously couple two or more sets of optical products. For example, the coupling platform 200 can simultaneously couple the first optical element 104 and the first optoelectronic chip 105, and the second optical element 106 and the second optoelectronic chip 107.

Refer to FIG. 13. FIG. 13 is a diagram of another coupling method according to an embodiment of this application. The coupling method is used to simultaneously couple a first optical element and a first optoelectronic chip, and a second optical element and a second optoelectronic chip, and the first optoelectronic chip and the second optoelectronic chip are placed under an illumination condition. As shown in FIG. 13, the coupling method in FIG. 13 includes step S1301 and step S1302, and is applied to the coupling platform 200. Details are as follows:
**Step S1301: A coupling platform receives a light beam that passes through the first optical element and generates a first image, and the coupling platform further receives a light beam that passes through the second optical element and generates a second image.**

The coupling platform is, for example, the coupling platform 200. For descriptions of the coupling platform 200, refer to the related descriptions in FIG. 3 or FIG. 4. Details are not described herein again.

In a possible implementation, an imaging unit in the coupling platform receives the light beam that passes through the first optical element, and generates the first image. For a implementation process, refer to the descriptions of step S1001. Details are not described herein again.

In a possible implementation, the imaging unit in the coupling platform receives the light beam that passes through the second optical element, and generates the second image.

For example, the imaging unit 201 in the coupling platform 200 receives the light beam that passes through the second optical element, and generates the second image. The light beam received by the imaging unit 201 includes a light beam reflected by an illuminated pattern on the second optoelectronic chip, and the second image includes an image B. For related descriptions of the imaging unit 201, refer to the foregoing corresponding content. Details are not described herein again. The second optical element is, for example, the second optical element 106 shown in FIG. 3 or FIG. 4, and the second optoelectronic chip is, for example, the second optoelectronic chip 107 shown in FIG. 3 or FIG. 4. For descriptions of the second optical element 106 and the second optoelectronic chip 107, refer to the related descriptions in FIG. 3 or FIG. 4. Details are not described herein again.

**Step S1302: The coupling platform adjusts a relative pose between the first optoelectronic chip and the first optical element, and the coupling platform further adjusts a relative pose between the second optoelectronic chip and the second optical element.**

In a possible implementation, a control unit in the coupling platform controls an adjustment unit in the coupling platform based on the first image, and the adjustment unit adjusts the relative pose between the first optoelectronic chip and the first optical element based on a control instruction of the control unit. For a implementation process, refer to the descriptions of step S1002. Details are not described herein again.

In another possible implementation, the control unit in the coupling platform controls the adjustment unit in the coupling platform based on the second image, and the adjustment unit adjusts the relative pose between the second optoelectronic chip and the second optical element based on a control instruction of the control unit.

The control unit is, for example, the foregoing control unit 202, and the adjustment unit is, for example, the foregoing adjustment unit 203. For descriptions of the control unit 202 or the adjustment unit 203, refer to the descriptions corresponding to FIG. 3 and FIG. 4. Details are not described herein again.

For how the control unit adjusts the relative pose between the second optoelectronic chip and the second optical element based on the second image, refer to the related descriptions of adjusting, by the control unit, the relative pose between the first optoelectronic chip and the first optical element based on the first image in step S1002. Details are not described herein again.

It may be understood that the coupling platform 200 may couple only one set of optical products, for example, couple only the first optical element and the first optoelectronic chip, or couple only the second optical element and the second optoelectronic chip. Alternatively, two sets of optical products may be simultaneously coupled. For example, the first optical element and the first optoelectronic chip, and the second optical element and the second optoelectronic chip are simultaneously coupled. It should be noted that simultaneously coupling two sets of optical products cannot be understood as simultaneously starting coupling of the two sets of optical products and/or simultaneously ending coupling of the two sets of optical products, but only indicates that the coupling platform 200 can simultaneously perform a coupling operation on the two sets of optical products.

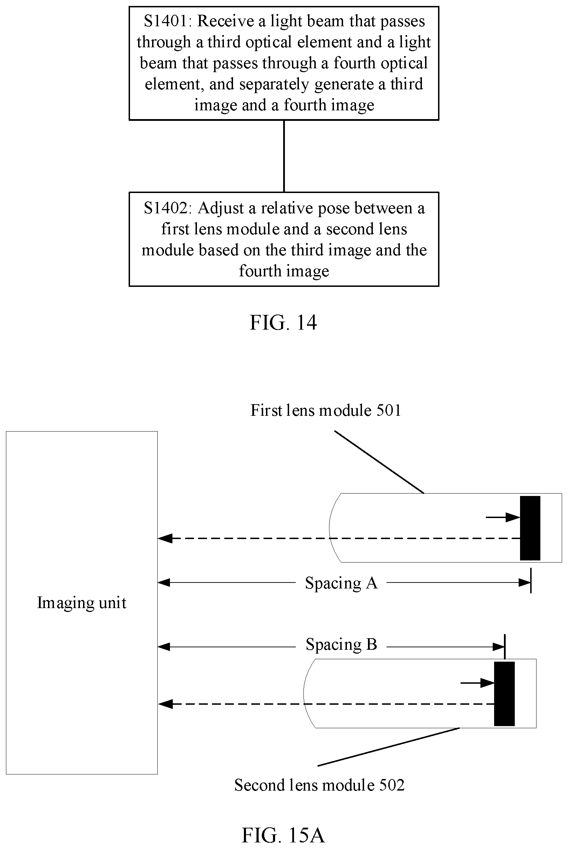

In addition to simultaneously performing a coupling operation on two sets of optical products, the coupling platform 200 can further couple two sets of optical modules. For a implementation, refer to subsequent content corresponding to FIG. 14. Details are not described herein.

In a possible implementation, the first optical element is rigidly connected to the second optical element, and/or the first optoelectronic chip is rigidly connected to the second optoelectronic chip. The following describes implementation processes of the coupling platform in different cases.

**Case 1:** The first optical element is rigidly connected to the second optical element.

The coupling platform may first couple one set of optical products based on the coupling method shown in FIG. 10. For example, the first optical element and the first optoelectronic chip are first coupled based on the coupling method shown in FIG. 10.

Then, the coupling platform implements coupling between the second optical element and the second optoelectronic chip by adjusting a spatial position of the second optoelectronic chip. For a implementation process, refer to the coupling method shown in FIG. 10. A difference lies in that only the spatial position of the second optoelectronic chip is adjusted in this implementation process.

Optionally, the coupling platform may alternatively implement coupling between the second optical element and the second optoelectronic chip by adjusting a spatial position of the second optical element. In this implementation process, it needs to be ensured that the relative pose between the first optical element and the first optoelectronic chip remains unchanged (because the first optical element and the first optoelectronic chip have been coupled).

**Case 2:** The first optoelectronic chip is rigidly connected to the second optoelectronic chip.

The coupling platform may first couple one set of optical products based on the coupling method shown in FIG. 10. For example, the first optical element and the first optoelectronic chip are first coupled based on the coupling method shown in FIG. 10.

Then, the coupling platform implements coupling between the second optical element and the second optoelectronic chip by adjusting a spatial position of the second optical element. For a implementation process, refer to the coupling method shown in FIG. 10. A difference lies in that only the spatial position of the second optical element is adjusted in this implementation process.

Optionally, the coupling platform may alternatively implement coupling between the second optical element and the second optoelectronic chip by adjusting a spatial position of the second optoelectronic chip. In this implementation process, it needs to be ensured that the relative pose between the first optical element and the first optoelectronic chip remains unchanged (because the first optical element and the first optoelectronic chip have been coupled).

**Case 3:** The first optical element is rigidly connected to the second optical element, and the first optoelectronic chip is rigidly connected to the second optoelectronic chip.

In this case, the coupling platform may also first couple one set of optical products based on the coupling method shown in FIG. 10. For example, the first optical element and the first optoelectronic chip are first coupled based on the coupling method shown in FIG. 10. Then, the second optical element and the second optoelectronic chip may be coupled by adjusting a pitch angle (rotating around an x-axis direction) of the first optical element and/or a pitch angle of the first optoelectronic chip.

In addition, it may be ensured, based on imaging of the illuminated pattern on the first optoelectronic chip and the illuminated pattern on the second optoelectronic chip in the imaging unit, that the first optoelectronic chip is located on a focal plane of the first optical element and the second optoelectronic chip is located on a focal plane of the second optical element in a relative pose adjustment process, to complete coupling. In this implementation, assembly time of optical products can be reduced, and assembly efficiency can be improved.

Some devices include at least two lens modules. The device can normally operate (implement functions such as photographing and detection) only when the lens modules of the device are in a coupled state. For example, a transmitter lens module and a receiver lens module of a lidar need to be placed at preset positions, to ensure that the lidar can normally operate. For example, it needs to be ensured that an optical axis of the transmitter lens module of the lidar is parallel to an optical axis of the receiver lens module of the lidar, to ensure normal operation of the lidar. Further, on the basis that the optical axes of the transmitter lens module and the receiver lens module are parallel, it further needs to be ensured that an interval between the transmitter lens module and the receiver lens module is a preset value (for example, the interval is less than 3 mm).

The foregoing describes, by using an example, how to couple a set of optical products (for example, lens modules). The following describes, by using an example, how to couple lens modules.

Refer to FIG. 14. FIG. 14 is a diagram of another coupling method according to an embodiment of this application. The coupling method is used to couple a first lens module to a second lens module. The first lens module is, for example, obtained by coupling a third optical element to a third optoelectronic chip, the second lens module is, for example, obtained by coupling a fourth optical element to a fourth optoelectronic chip, and the third optoelectronic chip and the fourth optoelectronic chip are placed under an illumination condition. As shown in FIG. 14, the coupling method in FIG. 14 includes step S1401 and step S1402, and is applied to the coupling platform 200 or the coupling platform 300. Details are as follows:
**Step S1401: A coupling platform receives a light beam that passes through a third optical element and a light beam that passes through a fourth optical element, and separately generates a third image and a fourth image.**

The coupling platform is, for example, the coupling platform 200 or the coupling platform 300. For descriptions of the coupling platform 200, refer to the related descriptions in FIG. 3 or FIG. 4. Details are not described herein again. For descriptions of the coupling platform 300, refer to the related descriptions in FIG. 5 or FIG. 6. Details are not described herein again.

Optionally, the first lens module is, for example, the first lens module 501, and the second lens module is, for example, the second lens module 502. For descriptions of the first lens module 501 and the second lens module 502, refer to the related descriptions in FIG. 5 or FIG. 6. Details are not described herein again.

Optionally, the first lens module is, for example, obtained by coupling the first optical element 104 to the first optoelectronic chip 105, and the second lens module is, for example, obtained by coupling the second optical element 106 to the second optoelectronic chip 107. Correspondingly, the third optical element is, for example, the first optical element 104, the third optoelectronic chip is, for example, the first optoelectronic chip 105, the fourth optical element is, for example, the second optical element 106, and the fourth optoelectronic chip is, for example, the second optoelectronic chip 107.

In a possible implementation, an imaging unit in the coupling platform receives the light beam that passes through the third optical element and the light beam that passes through the fourth optical element, and separately generates the third image and the fourth image.

The imaging unit is, for example, the imaging unit 201, or may be the imaging unit 301. The light beam that passes through the third optical element includes a light beam reflected by an illuminated pattern on the third optoelectronic chip, and the light beam that passes through the fourth optical element includes a light beam reflected by an illuminated pattern on the fourth optoelectronic chip. For a implementation process in which the imaging unit receives the light beam that passes through the third optical element and generates the third image, and the imaging unit receives the light beam that passes through the fourth optical element and generates the fourth image, refer to the descriptions of step S1001. Details are not described herein again.

**Step S1402: The coupling platform adjusts a relative pose between the first lens module and the second lens module based on the third image and the fourth image.**

Because the first lens module and the second lens module are two lens modules to be coupled, an image C and an image D are in a same shape. In addition, when the first lens module and the second lens module are in a coupled state, the image C and the image D completely overlap. That the image C and the image D completely overlap when the first lens module and the second lens module are in the coupled state may be referred to as an implementation 1.

In some possible implementations, when the first lens module and the second lens module are in the coupled state, the image C and the image D may not completely overlap. That the image C and the image D do not completely overlap when the first lens module and the second lens module are in the coupled state may be referred to as an implementation 2. In this case, there is still a preset standard, and a coupling status between the first lens module and the second lens can be determined by using features of the image C and the image D. For example, when the first lens module and the second lens module are in the coupled state, the image C is adjacent to the image D. This is not limited in this application.

For ease of understanding, the following uses the foregoing "implementation 1" as an example to describe a coupling process of the first lens module and the second lens module.

In a possible implementation, a control unit in the coupling platform controls an adjustment unit in the coupling platform based on the third image and the fourth image, and the adjustment unit adjusts the relative pose between the first lens module and the second lens module based on a control instruction of the control unit.

The control unit is, for example, the control unit 202 or the control unit 302. When the control unit is the control unit 202, the adjustment unit is the adjustment unit 203. When the control unit is the control unit 302, the adjustment unit is the adjustment unit 303. For descriptions of the control unit 202, the control unit 302, the adjustment unit 203, or the adjustment unit 303, refer to the descriptions corresponding to FIG. 3 to FIG. 6. Details are not described herein again.

The control unit may control the adjustment unit, to make the adjustment unit adjust the relative pose between the first lens module and the second lens module, so that the image C and the image D completely overlap, thereby achieving coupling between the first lens module and the second lens module.

With reference to FIG. 7, the following shows examples of several possible adjustment manners.

It should be noted that control instructions performed by the adjustment unit below are all sent by the control unit. For smoothness and brevity of language, the adjustment unit is a main body performing an adjustment action in the following, and related descriptions of sending a control instruction by the control unit are not shown. Therefore, it should not be understood that the control unit does not send any control instruction or does not perform any action in an adjustment process.

**Adjustment manner A:** The adjustment unit adjusts spacings between the imaging unit and both the first lens module and the second lens module in an axial direction (an x-axis direction), so that a size of the image C is equal to a size of the image D.

Refer to FIG. 15A. FIG. 15A is a diagram of another coupling process according to an embodiment of this application, to show a case in which the first lens module and the second lens module have unequal distances from the imaging unit. As shown in FIG. 15A, a distance between the first lens module 501 and the imaging unit is a spacing A, a distance between the second lens module 502 and the imaging unit is a spacing B, and the spacing A is not equal to the spacing B.

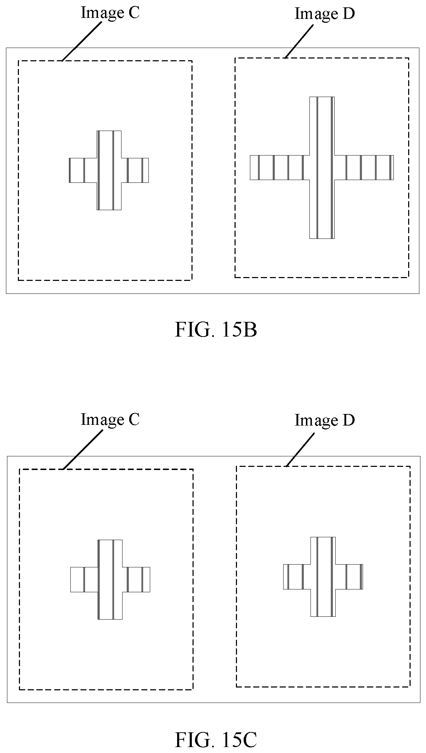

Refer to FIG. 15B. FIG. 15B is another diagram of imaging according to an embodiment of this application, to show imaging, in the imaging unit, of the optoelectronic chips in the first lens module and the second lens module. For example, the spacing A is greater than the spacing B. It can be learned from FIG. 15B that the image C is smaller than the image D.

The spacing between the first lens module 501 and the imaging unit in the axial direction and/or the spacing between the second lens module 502 and the imaging unit in the axial direction are/is adjusted, so that the spacing A can be equal to the spacing B, and therefore the size of the image C is the same as the size of the image D, as shown in FIG. 15C.

**Adjustment manner B:** The adjustment unit may alternatively adjust one or more of a yaw angle, a roll angle, a y-axis spatial position, and a z-axis spatial position of the first lens module and/or those of the second lens module, so that a center point of the image C overlaps a center point of the image D.

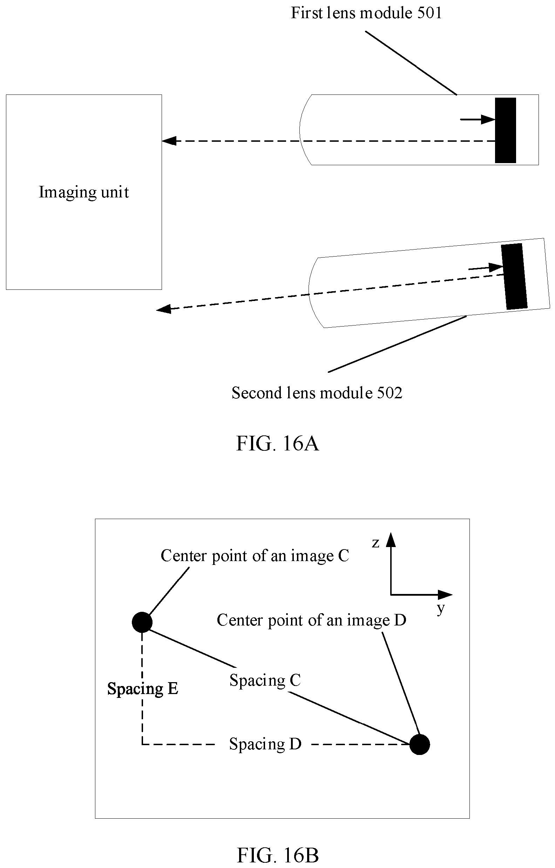

Refer to FIG. 16A. FIG. 16A is a diagram of another coupling process according to an embodiment of this application, to show a case in which the center point of the image C does not overlap the center point of the image D.

It may be understood that, because an imaging optical element used for the imaging unit is a long-focus lens or a collimator, when the first lens module 501 and the second lens module 502 are coupled, the center points of the image C and the image D overlap or basically overlap (a distance between the center points is less than 1 mm).

Refer to FIG. 16B. FIG. 16B is another diagram of imaging according to an embodiment of this application, to show positions of the center points of the image C and the image D in a case in which the first lens module 501 and the second lens module 502 are not coupled. As shown in FIG. 16B, a distance between the center point of the image C and the center point of the image D is a spacing C. With reference to FIG. 7, a distance between the center point of the image C and the center point of the image D in a y-axis direction is a spacing D, and a distance between the center point of the image C and the center point of the image D in a z-axis direction is a spacing E.

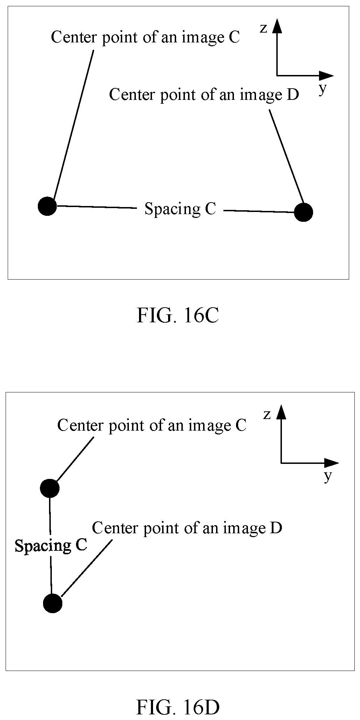

For example, the spacing between the center point of the image C and the center point of the image D in the z-axis direction may be shortened by adjusting the roll angle of the first lens module 501 and/or the roll angle of the second lens module 502. Refer to FIG. 16C. FIG. 16C is another diagram of imaging according to an embodiment of this application, to show a case in which the spacing between the center point of the image C and the center point of the image D in the z-axis direction is 0 (the spacing E shown in FIG. 16B is equal to 0, and the spacing C is equal to the spacing D). Optionally, the spacing between the center point of the image C and the center point of the image D in the z-axis direction may be alternatively shortened by adjusting a spatial position of the first lens module 501 in the z-axis direction and/or a spatial position of the second lens module 502 in the z-axis direction.

For example, the spacing between the center point of the image C and the center point of the image D in the y-axis direction may be shortened by adjusting the yaw angle of the first lens module 501 and/or the yaw angle of the second lens module 502. Refer to FIG. 16D. FIG. 16D is another diagram of imaging according to an embodiment of this application, to show a case in which the spacing between the center point of the image C and the center point of the image D in the y-axis direction is 0 (the spacing D shown in FIG. 16B is equal to 0, and the spacing C is equal to the spacing E). Optionally, the spacing between the center point of the image C and the center point of the image D in the y-axis direction may be alternatively shortened by adjusting a spatial position of the first lens module 501 in the y-axis direction and/or a spatial position of the second lens module 502 in the z-axis direction.

It should be noted that adjusting one or more of the yaw angle, the roll angle, the y-axis spatial position, and the z-axis spatial position of the first lens module and/or those of the second lens module may be implemented by adjusting one or more of the yaw angle, the roll angle, the y-axis spatial position, and the z-axis spatial position of the first lens module, or may be implemented by adjusting one or more of the yaw angle, the roll angle, the y-axis spatial position, and the z-axis spatial position of the second lens module.

**Adjustment manner C:** The adjustment unit may alternatively adjust a pitch angle of the first lens module and/or a pitch angle of the second lens module, so that the image C and the image D overlap or basically overlap.

It may be understood that, when coupling between the first lens module and the second lens module is completed, the image C and the image D overlap or basically overlap (a spacing between a center point of the image C and a center point of the image D is less than 1 mm).

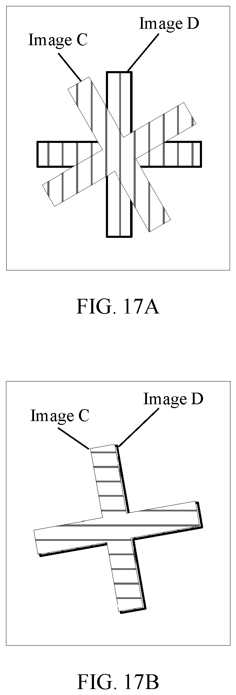

Refer to FIG. 17A. FIG. 17A is another diagram of imaging according to an embodiment of this application, to show a case in which the center point of the image C overlaps the center point of the image D, but the image C does not completely overlap the image D.

As shown in FIG. 17A, the center point of the image C overlaps the center point of the image D. However, because rotation angles of the image C and the image D around an x-axis are different, the image C does not completely overlap the image D. Therefore, the image C and the image D can completely overlap by adjusting the pitch angle of the first lens module and/or the pitch angle of the second lens module.

Refer to FIG. 17B. FIG. 17B is another diagram of imaging according to an embodiment of this application, to show a case in which the image C completely overlaps the image D.

For example, the pitch angle of the first lens module and/or the pitch angle of the second lens module are/is adjusted, so that the image C and the image D completely overlap, thereby achieving coupling between the first lens module and the second lens module.

Optionally, in a adjustment process, an execution sequence of the foregoing three adjustment manners is not limited.

For example, the adjustment manner A may be first performed, so that the size of the image C is equal to the size of the image D. Then, the adjustment manner B is performed, so that the center point of the image C overlaps the center point of the image D. Finally, the adjustment manner C is performed, so that the image C and the image D overlap or basically overlap, to complete coupling.

For another example, the adjustment manner B may be first performed, so that the center point of the image C overlaps the center point of the image D. Then, the adjustment manner A is performed, so that the size of the image C is equal to the size of the image D. Finally, the adjustment manner C is performed, so that the image C and the image D overlap or basically overlap, to complete coupling.

Optionally, in a adjustment process, the foregoing three adjustment manners may be sequentially used for adjustment, or a plurality of adjustment manners may be simultaneously used for adjustment.

For example, the adjustment manner A and the adjustment manner B may be performed simultaneously, or the adjustment manner B and the adjustment manner C may be performed simultaneously, or the adjustment manner A and the adjustment manner C may be performed simultaneously, or the adjustment manner A, the adjustment manner B, and the adjustment manner C may be performed simultaneously.

In conclusion, the coupling platform provided in this application simply requires the control unit to control the adjustment unit based on the first image and then the adjustment unit to execute a corresponding control instruction to adjust the relative pose between the first optoelectronic chip and the first optical element, achieving coupling between the first optoelectronic chip and the first optical element. This eliminates the need for complex power-on and power-off processes, streamlining operations and taking short time, while allowing for automatic assembly of an optical product. Therefore, it reduces cycle time of an assembly process of the optical product, enhances assembly efficiency, and increases units per hour of the optical product.

In addition, the coupling platform provided in this application can further simultaneously couple a plurality of sets of optical products. Further, the coupling platform used in this application can further couple lens modules.

An implementation of this application further provides a coupling apparatus. The coupling apparatus includes the coupling platform shown in one or more of FIG. 1, FIG. 2, FIG. 3, FIG. 4, FIG. 5, or FIG. 6.

An implementation of this application further provides a coupling apparatus. The apparatus includes a processor and a memory. The memory is configured to store a computer program, and the processor is configured to execute the computer program, so that the apparatus performs the coupling method in FIG. 10, FIG. 13, or FIG. 14.

An implementation of this application provides a computer program product. The computer program product includes a computer program (which may also be referred to as code or instructions). When the computer program is run, a computer is enabled to perform the coupling method in FIG. 10, FIG. 13, or FIG. 14.

An implementation of this application provides a chip. The chip includes a processor. The processor is configured to execute instructions. When the processor executes the instructions, the chip is enabled to perform the coupling method in FIG. 10, FIG. 13, or FIG. 14.

An implementation of this application further provides a computer-readable storage medium. The computer-readable storage medium stores instructions. When the instructions are run on at least one processor, the coupling method in FIG. 10, FIG. 13, or FIG. 14 is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A coupling platform, wherein the coupling platform is configured to couple a first optoelectronic chip to a first optical element, the first optoelectronic chip is placed under an illumination condition, the coupling platform comprises an imaging unit, a control unit, and an adjustment unit, and the first optical element is disposed between the first optoelectronic chip and the imaging unit;
the imaging unit is configured to receive a light beam that passes through the first optical element and generate a first image, wherein the first image comprises an image of a light spot on the first optoelectronic chip;
the control unit is configured to control the adjustment unit based on the first image; and
the adjustment unit is configured to adjust a relative pose between the first optoelectronic chip and the first optical element.

2. The coupling platform according to claim 1, wherein the coupling platform further comprises an illumination unit, and the illumination unit is configured to provide an illumination light beam for the first optoelectronic chip.

3. The coupling platform according to claim 1 or 2, wherein the adjustment unit is configured to adjust a spatial position of the first optoelectronic chip and/or a spatial position of the first optical element.

4. The coupling platform according to any one of claims 1 to 3, wherein the coupling platform is configured to couple a second optoelectronic chip to a second optical element, the second optoelectronic chip is placed under an illumination condition, and the second optical element is disposed between the second optoelectronic chip and the imaging unit;
the imaging unit is further configured to receive a light beam that passes through the second optical element and generate a second image, wherein the second image comprises an image of a light spot on the second optoelectronic chip;
the control unit is further configured to control the adjustment unit based on the first image and the second image; and
the adjustment unit is further configured to adjust a relative pose between the second optoelectronic chip and the second optical element.

5. The coupling platform according to claim 4, wherein the adjustment unit is further configured to adjust a spatial position of the second optoelectronic chip and/or a spatial position of the second optical element.

6. The coupling platform according to claim 4 or 5, wherein the first optoelectronic chip is an optical transmitter chip, and the second optoelectronic chip is an optical receiver chip; or the first optoelectronic chip is an optical receiver chip, and the second optoelectronic chip is an optical transmitter chip; or both the first optoelectronic chip and the second optoelectronic chip are optical transmitter chips; or both the first optoelectronic chip and the second optoelectronic chip are optical receiver chips.

7. The coupling platform according to any one of claims 4 to 6, wherein the first optoelectronic chip is rigidly connected to the second optoelectronic chip, and/or the first optical element is rigidly connected to the second optical element.

8. The coupling platform according to any one of claims 1 to 7, wherein the adjustment unit comprises a six-dimensional adjustment stage or a three-dimensional adjustment stage.

9. The coupling platform according to any one of claims 1 to 8, wherein the imaging unit comprises an imaging optical element and an image sensor, the imaging optical element comprises a long-focus lens or a collimator, and the image sensor is configured to generate an image based on a light beam collected by the imaging optical element.

10. The coupling platform according to claim 2, wherein the illumination unit comprises any one or more of the following:
an optical fiber, an optical fiber, frosted glass, or a reflector.

11. A coupling platform, wherein the coupling platform is configured to couple a first lens module to a second lens module, the coupling platform comprises an imaging unit, a control unit, and an adjustment unit, the first lens module comprises a first optoelectronic chip and a first optical element, the second lens module comprises a second optoelectronic chip and a second optical element, the first optoelectronic chip and the second optoelectronic chip are placed under an illumination condition, and a spacing between the first lens module and the imaging unit is equal to a spacing between the second lens module and the imaging unit;
the imaging unit is configured to receive a light beam that passes through the first optical element and a light beam that passes through the second optical element, and separately generate a first image and a second image, wherein the first image comprises an image of a light spot on the first optoelectronic chip, and the second image comprises an image of a light spot on the second optoelectronic chip;
the control unit is configured to control the adjustment unit based on the first image and the second image; and
the adjustment unit is configured to adjust a relative pose between the first lens module and the second lens module.

12. The coupling platform according to claim 11, wherein the coupling platform further comprises an illumination unit, and the illumination unit is configured to provide an illumination light beam for the first optoelectronic chip and/or provide an illumination light beam for the second optoelectronic chip.

13. The coupling platform according to claim 11 or 12, wherein the adjustment unit is configured to adjust a spatial position of the first lens module and/or a spatial position of the second lens module.

14. The coupling platform according to any one of claims 11 to 13, wherein the first lens module is an optical transmitter module, and the second lens module is an optical receiver module.

15. The coupling platform according to any one of claims 11 to 14, wherein the adjustment unit comprises a six-dimensional adjustment stage or a three-dimensional adjustment stage.

16. The coupling platform according to any one of claims 11 to 15, wherein the imaging unit comprises an imaging optical element and an image sensor, the imaging optical element comprises a long-focus lens or a collimator, and the image sensor is configured to generate an image based on a light beam collected by the imaging optical element.

17. The coupling platform according to any one of claims 11 to 16, wherein the illumination unit comprises any one or more of the following:
an optical fiber, an optical fiber, frosted glass, or a reflector.

18. A coupling method, wherein the method comprises:
receiving a light beam that passes through a first optical element, and generating a first image, wherein the first image comprises an image of a light spot on a first optoelectronic chip, and the first optoelectronic chip is placed under an illumination condition; and
adjusting a relative pose between the first optoelectronic chip and the first optical element based on the first image.

19. The method according to claim 18, wherein adjusting the relative pose between the first optoelectronic chip and the first optical element comprises:
adjusting a spatial position of the first optoelectronic chip and/or a spatial position of the first optical element.

20. The method according to claim 18 or 19, wherein the method further comprises:
receiving a light beam that passes through a second optical element, and generating a second image, wherein the second image comprises an image of a light spot on a second optoelectronic chip, and the first optoelectronic chip is placed under an illumination condition; and
adjusting a relative pose between the second optoelectronic chip and the second optical element based on the first image and the second image.

21. The method according to claim 20, wherein adjusting the relative pose between the second optoelectronic chip and the second optical element comprises:
adjusting a spatial position of the second optoelectronic chip and/or a spatial position of the second optical element.

22. The method according to claim 20 or 21, wherein the first optoelectronic chip is an optical transmitter chip, and the second optoelectronic chip is an optical receiver chip; or both the first optoelectronic chip and the second optoelectronic chip are optical transmitter chips; or both the first optoelectronic chip and the second optoelectronic chip are optical receiver chips.

23. The method according to any one of claims 20 to 22, wherein the first optoelectronic chip is rigidly connected to the second optoelectronic chip, and/or the first optical element is rigidly connected to the second optical element.

24. A coupling method, wherein the method is used to couple a first lens module to a second lens module, the first lens module comprises a first optoelectronic chip and a first optical element, the second lens module comprises a second optoelectronic chip and a second optical element, and the method comprises:
receiving a light beam that passes through the first optical element and a light beam that passes through the second optical element, and separately generating a first image and a second image, wherein the first image comprises an image of a light spot on the first optoelectronic chip, the second image comprises an image of a light spot on the second optoelectronic chip, and the first optoelectronic chip and the second optoelectronic chip are placed under an illumination condition; and
adjusting a relative pose between the first lens module and the second lens module based on the first image and the second image.

25. The method according to claim 24, wherein adjusting the relative pose between the first lens module and the second lens module comprises:
an adjustment unit, configured to adjust a spatial position of the first lens module and/or a spatial position of the second lens module.

26. The method according to claim 24 or 25, wherein the first lens module is an optical transmitter module, and the second lens module is an optical receiver module.

27. A coupling apparatus, wherein the apparatus comprises the coupling platform according to any one of claims 1 to 10, or the coupling platform according to any one of claims 11 to 17.

28. The apparatus according to claim 27, wherein the apparatus is configured to perform the method according to any one of claims 18 to 23, or the method according to any one of claims 24 to 26.

29. A coupling apparatus, wherein the apparatus comprises a processor and a memory, the memory is configured to store a computer program, and the processor is configured to execute the computer program, to enable the apparatus to perform the method according to any one of claims 18 to 23 or the method according to any one of claims 24 to 26.

30. A computer-readable storage medium, wherein the computer-readable storage medium comprises instructions, and when the instructions are run by a processor, the method according to any one of claims 18 to 23 or the method according to any one of claims 24 to 26 is implemented.

31. A computer program product, wherein the computer program product comprises instructions, and when the instructions are run by a processor, the method according to any one of claims 18 to 23 or the method according to any one of claims 24 to 26 is implemented.
